# EUROPÄISCHE PATENTSCHRIFT

(11) **EP 3 537 617 B1**
(45) Veröffentlichungstag und Bekanntmachung des Hinweises auf die Patenterteilung: **26.10.2022**
(21) Anmeldenummer: 19161242.3
(22) Anmeldetag: 07.03.2019
(51) Int. Cl.: H04B 5/00, H02J 50/10, A24C 5/32, A24C 5/33, H01F 38/18

(54) **VORRICHTUNG ZUM PRÜFEN, BEARBEITEN UND/ODER FÖRDERN VON ARTIKELN DER TABAK VERARBEITENDEN INDUSTRIE**
DEVICE FOR TESTING, PROCESSING AND/OR CONVEYING ARTICLES OF THE TOBACCO PROCESSING INDUSTRY
DISPOSITIF DE CONTRÔLE, DE TRAITEMENT ET/OU DE TRANSPORT D'ARTICLES DE L'INDUSTRIE DE TRAITEMENT DU TABAC

(30) Priorität: 08.03.2018 DE 102018105363
(43) Veröffentlichungstag der Anmeldung: 11.09.2019
(73) Patentinhaber: Hauni Maschinenbau GmbH, 21033 Hamburg (DE)
(72) Erfinder: Hansen, Volker, 22453 Hamburg (DE); Gögel, Patrick, 21075 Hamburg (DE)
(74) Vertreter: Eisenführ Speiser

(56) Entgegenhaltungen:
- EP-A1- 2 904 913
- EP-A2- 3 106 043

## Beschreibung

Die Erfindung betrifft eine Vorrichtung zum Prüfen, Bearbeiten und/oder Fördern von Artikeln der Tabak verarbeitenden Industrie, mit mindestens einem um eine Drehachse rotierend gelagerten Grundkörper, an oder in dem mindestens ein elektrischer Verbraucher angeordnet ist, einer den Grundkörper rotierend antreibenden Antriebseinheit, die einen ersten Endabschnitt, an dem der Grundkörper mit der Antriebseinheit gekoppelt ist, und einen vom ersten Endabschnitt entfernt gelegenen zweiten Endabschnitt aufweist, und einer mit dem elektrischen Verbraucher gekoppelten Übertragungseinrichtung, die eine Drehübertragungseinheit mit einem ortsfesten Primärteil und einem um eine Drehachse rotierend gelagerten Sekundärteil aufweist, wobei die Drehübertragungseinheit Energie- und/oder Datensignalübertragungsmittel zur Energieversorgung des elektrischen Verbrauchers und/oder Übertragung von Signalen zu oder von dem elektrischen Verbraucher enthält.

Artikel der Tabak verarbeitenden Industrie können beispielsweise stabförmige Gegenstände wie Tabakstäbe und -stöcke mit begrenzter Länge, Filterstäbe oder Zigaretten mit und ohne Filter oder auch Zigarillos sein.

Als elektrische Verbraucher kommen insbesondere Elektromotoren zum Einsatz, die unabhängig von einer den Grundkörper rotierend antreibenden Antriebseinheit und bevorzugt auch unabhängig voneinander arbeiten und am Grundkörper beweglich angeordnete Komponenten antreiben. Die sich daraus ergebenden Möglichkeiten reichen von der Bewegung jedes einzelnen Artikels über segmentweise Bewegung von mehreren Artikeln bis hin zur Veränderung der Geometrie des Grundkörpers (bzw. einer darauf basierenden Fördertrommel) durch beispielsweise anpassbare Mulden oder Teilkreise. Der Vorteil einer solchen Lösung gegenüber einer mechanischen Getriebeanordnung besteht insbesondere in einem geringeren Verschleiß und somit in einem reduzierten Wartungsaufwand. Ein weiterer wichtiger Vorteil gegenüber einer mechanischen Getriebeanordnung liegt in einer einfachen getrennten Ansteuerbarkeit der Elektromotoren und somit der von ihnen angetriebenen Komponenten, wodurch sich beispielsweise auf insoweit konstruktive einfache Weise ein deutlich flexiblerer Betrieb der gesamten Vorrichtung oder Anlage erzielen lässt.

Als ein Beispiel sei eine Wendevorrichtung zum Wenden von Zigaretten genannt, wie sie in einer Filteransetzmaschine verwendet wird. Bei bekannten Zigarettenproduktionsmaschinen ist die Drehung jeder zweiten Zigarette notwendig, damit die Zigaretten einheitlich ausgerichtet verpackt werden können, so dass die Mundstücke alle jeweils zur Öffnung einer Zigarettenschachtel orientiert sind. Dazu weist die Wendevorrichtung als rotierend angetriebenen Grundkörper eine Trommel auf, auf der zur Drehung der Zigaretten Wendesegmente in Form von Drehtellern vorgesehen sind, die unabhängig von der Trommel und unabhängig voneinander durch Elektromotoren angetrieben werden.

Ferner können durch die Drehübertragungseinheit neben der Übertragung von Energie auch weitere vielfältige Funktionen in den Grundkörper implementiert werden. Somit ist es möglich, prinzipiell jede Messgröße, die sich mit elektrischer Sensorik erfassen lässt, auf dem rotierenden Grundkörper zur Produktionszeit zu erfassen. Des Weiteren kann jeder Artikel wie auch der Prozess im Allgemeinen sensorisch erfasst werden.

Aus der EP 3 106 043 A2, die den nächstkommenden Stand der Technik bildet, von der die vorliegende Erfindung ausgeht, ist eine Vorrichtung zum Fördern, Prüfung und/oder Bearbeiten von Artikeln der Tabak verarbeitenden Industrie mit einem rotierend antreibbaren Grundkörper und mindestens einem an dem rotierbaren Grundkörper angeordneten elektrischen Verbraucher bekannt. Zur kontaktfreien Stromversorgung des elektrischen Verbrauchers ist eine Leistungsübertragungseinrichtung vorgesehen, die zur kontaktfreien Übertragung eines Versorgungsstroms ein ortsfestes Primärteil und ein mit dem rotierbaren Grundkörper verbundenes Sekundärteil aufweist. Ferner ist eine Signalübertragungseinrichtung zur kontaktfreien Übertragung eines Signals zu oder von dem elektrischen Verbraucher vorgesehen, wobei eine Modulationseinrichtung zur Frequenzmodulation/-demodulation des kontaktfrei übertragenen Signals vorgesehen ist.

Die EP 2 904 913 A1 offenbart eine Vorrichtung zum Wenden von stabförmigen Gegenständen der Tabak verarbeitenden Industrie, insbesondere Zigaretten, mit einer Wendetrommel, die eine durch einen Trommelantrieb angetriebene Trommelwelle und mindestens ein Wendesegment aufweist, welches mit mindestens zwei Aufnahmen für zu wendende stabförmige Gegenstände versehen und relativ zur Wendetrommel um eine Drehachse derart drehbar angeordnet ist, dass bei einer Drehung des Wendesegments in den mindestens zwei Aufnahmen angeordnete Gegenstände parallel zueinander gewendet werden. Um das mindestens eine Wendesegment anzutreiben, ist eine elektrische Antriebsvorrichtung entsprechend vorgesehen.

Es ist eine Aufgabe der Erfindung, eine Lösung vorzuschlagen, die eine einfache Einbindbarkeit der Übertragungseinrichtung und insbesondere deren Drehübertragungseinheit in eine Vorrichtung der eingangs genannten Art ermöglicht.

Gelöst wird diese Aufgabe mit einer Vorrichtung zum Prüfen, Bearbeiten und/oder Fördern von Artikeln der Tabak verarbeitenden Industrie, mit mindestens einem um eine Drehachse rotierend gelagerten Grundkörper, an oder in dem mindestens ein elektrischer Verbraucher angeordnet ist, einer den Grundkörper rotierend antreibenden Antriebseinheit, die einen ersten Abschnitt, an dem der Grundkörper mit der Antriebseinheit gekoppelt ist, und einen vom ersten Abschnitt entfernt gelegenen zweiten Abschnitt aufweist, und einer mit dem elektrischen Verbraucher gekoppelten Übertragungseinrichtung, die eine Drehübertragungseinheit mit einem ortsfesten Primärteil und einem um eine Drehachse rotierend gelagerten Sekundärteil aufweist, wobei die Drehübertragungseinheit Energie- und/oder Datensignalübertragungsmittel zur Energieversorgung des elektrischen Verbrauchers und/oder Übertragung von Signalen zu oder von dem elektrischen Verbraucher enthält, dadurch gekennzeichnet, dass die Drehübertragungseinheit am oder im zweiten Abschnitt der Antriebseinheit angeordnet ist und deren Sekundärteil mit der Antriebseinheit gekoppelt ist und unmittelbar von dieser rotierend angetrieben wird.

Die Erfindung bietet für die Implementierung der Drehübertragungseinheit eine einfache und zugleich platzsparende Möglichkeit, welche sich auch ohne größere Anpassungsarbeiten und somit im Wesentlichen problemlos an unterschiedlichen Anlagen realisieren lässt. Denn es galt für eine einfache Einbindbarkeit eine Einbauposition zu finden, die in allen Trommelmaschinen der Tabak verarbeitenden Industrie vorhanden ist. Dies wird erfindungsgemäß dadurch erreicht, dass die Drehübertragungseinheit am oder im zweiten Abschnitt der Antriebseinheit angeordnet ist und deren Sekundärteil mit der Antriebseinheit so gekoppelt ist, dass es unmittelbar von dieser rotierend angetrieben wird. Hiernach erfolgt die Anordnung der Drehübertragungseinheit an oder in dem vom zweiten Abschnitt gebildeten hinteren Bereich der Antriebseinheit. Die Erfindung lehrt nicht nur den Einbau der Drehübertragungseinheit an einem Ort, der in der Regel ansonsten nicht genutzt wird, und somit die Ausnutzung von vorhandenem Bauraum auf besonders geschickte Weise, sondern ermöglicht auch die Realisierung der Drehübertragungseinheit mit einer im Wesentlichen universellen oder standardisierten Konstruktion, was sich auch vorteilhaft auf die Herstellkosten auswirkt. Mit Hilfe der Erfindung ist nämlich kein weiterer zeitintensiver konstruktiver Aufwand notwendig, um die Drehübertragungseinheit zu implementieren. Somit ergeben sich des Weiteren vielfältige Möglichkeiten der Nachrüstbarkeit an bereits bestehenden Maschinen und Anlagen. Bevorzugt kann mindestens einer der beiden genannten Abschnitte als Endabschnitt ausgebildet sein.

Durch die Verfügbarkeit einer solchen Drehübertragungseinheit ist es außerdem möglich, für jede Trommel flexibel zu entscheiden, ob diese als intelligente elektromechanische Trommel oder nur als klassische Trommel eingesetzt wird. Ferner wird mit Hilfe der Erfindung die Option geschaffen, die Vernetzung einer Maschine deutlich stärker auszuprägen und im Sinne des "Industrie-4.0"-Gedankens weitere Informationen von dem Grundkörper bzw. der Trommel und den Einzelprodukten zu erhalten. Durch die Möglichkeit, nun auch mit umlaufenden Prüfeinrichtungen zu arbeiten, erweitert sich außerdem noch der Zeitraum, der für die Einzelproduktprüfung zur Verfügung steht.

Des Weiteren ist eine um eine Drehachse rotierende und von der Antriebseinheit angetriebene Antriebswelle mit einem ersten Abschnitt, der sich aus dem ersten Abschnitt der Antriebseinheit erstreckt, und mit einem zweiten Abschnitt, der sich im Bereich des zweiten Abschnittes der Antriebseinheit befindet, vorgesehen und ist das Sekundärteil der Drehübertragungseinheit mit dem zweiten Abschnitt der Antriebswelle drehfest gekoppelt, so dass die Drehachse des Sekundärteils der Drehübertragungseinheit mit der Drehachse der Antriebswelle zusammenfällt. Bevorzugt kann mindestens einer der beiden genannten Abschnitte als Endabschnitt ausgebildet sein. Somit kann die Drehübertragungseinheit auf geschickte Weise in den Bereich der Antriebsachse integriert werden, wobei ein Drehantrieb in vielen Fällen typisch ist und dementsprechend der erfindungsgemäß für die Drehübertragungseinheit vorgesehene Bauraum grundsätzlich nutzbar erscheint, nämlich, wie zuvor bereits angemerkt, im hinteren Bereich der Antriebseinheit. Ist an der Antriebseinheit noch zusätzlich ein Drehzahlsensor im hinteren Bereich vorgesehen, so kann die Drehübertragungseinheit bei Bedarf auch zwischen dem Drehzahlsensor und dem Rotor-Stator-Paket der Antriebseinheit angeordnet werden.

Bevorzugte Ausführungen und Weiterbildungen der Erfindung sind in den abhängigen Ansprüchen angegeben.

Bei einer bevorzugten Ausführung ist der Grundkörper mit dem ersten Abschnitt der Antriebswelle drehfest gekoppelt, so dass die Drehachse des Grundkörpers mit der Drehachse der Antriebswelle zusammenfällt.

Bei einer weiteren bevorzugten Ausführung ist die Antriebswelle hohl und enthält mindestens eine, vorzugsweise gegenüber einer Rotation verdrillsicher zentral axial verlegte elektrische Leitung, die zur Versorgung des elektrischen Verbrauchers vom Sekundärteil der Drehübertragungseinheit zum Grundkörper führt. Dies ergibt eine besonders platzsparende und somit geschickte Anordnung und Führung der elektrischen Leitung von der Drehübertragungseinheit zum Grundkörper.

Eine weitere bevorzugte Ausführung der Erfindung zeichnet sich dadurch aus, dass der Grundkörper einen ersten Abschnitt und einen zweiten Abschnitt aufweist, wobei der zweite Abschnitt des Grundkörpers benachbart zum ersten Abschnitt der Antriebseinheit und der erste Abschnitt des Grundkörpers vom zweiten Abschnitt des Grundkörpers entfernt gelegen ist, und benachbart zum ersten Abschnitt des Grundkörpers mindestens eine Moduleinheit angeordnet ist, die mindestens eine Versorgungseinrichtung zur Versorgung des elektrischen Verbrauchers aufweist. Bevorzugt kann mindestens einer der beiden genannten Abschnitte als Endabschnitt ausgebildet sein. Während die Drehübertragungseinheit am hinteren Bereich oder Ende der aus Antriebseinheit und Grundkörper gebildeten Baugruppe vorgesehen ist, ist bei dieser bevorzugten Ausführung mindestens eine Moduleinheit am entgegengesetzten vorderen Ende dieser Baugruppe anzuordnen und dementsprechend einfach zugänglich. Ferner bietet eine solche Anordnung auch eine einfache Nachrüstbarkeit für bestehende Maschinen; denn mit der Anordnung einer Moduleinheit, die mindestens eine Versorgungseinrichtung zur Versorgung des elektrischen Verbrauchers aufweist, entfällt die Notwendigkeit, eine solche Versorgungseinrichtung am oder im Grundkörper zu implementieren bzw. nachzurüsten. Insbesondere lässt sich in der Moduleinheit die sog. Rotorelektronik unterbringen, so dass hierfür kein besonderer Platz im Grundkörper oder in der Antriebseinheit bereitgestellt oder geschaffen werden muss.

Bei einer bevorzugten Weiterbildung dieser Ausführung enthält der Grundkörper einen Hohlraum, der sich an den Hohlraum der Antriebswelle anschließt oder den Hohlraum des sich durch den Grundkörper erstreckenden ersten Abschnittes der Antriebswelle bildet und durch den die elektrische Leitung bis zu der oder in die Moduleinheit geführt ist. Bei dieser Weiterbildung lässt sich somit die elektrische Leitung auf besonders einfache und zugleich platzsparende und somit geschickte Weise bis in die Moduleinheit verlegen. Dabei kann bevorzugt die Moduleinheit eine Durchgangsöffnung aufweisen, die sich an den Hohlraum im Grundkörper anschließt und durch die die elektrische Leitung mit ihrem Ende nach außen geführt ist, wobei dieses Ende der elektrischen Leitung einen Steckverbinder einer ersten Art aufweist und mindestens ein Steckverbinder einer zweiten Art an die Versorgungseinrichtung zur Versorgung des elektrischen Verbrauchers angeschlossen und zur Herstellung einer elektrischen Verbindung mit dem mindestens einen Steckverbinder der ersten Art an der Moduleinheit vorgesehen ist. Die Verwendung einer solchen Steckverbindung ermöglicht bei einem Wechsel der Moduleinheit oder des Grundkörpers eine schnelle und einfache Trennung. Besonders platzsparend ist eine Anordnung mindestens eines Steckverbinders am Umfang der Moduleinheit.

In Abhängigkeit von der Funktion der in der Moduleinheit enthaltenen mindestens einen Versorgungseinrichtung kann die Moduleinheit für verschiedene Funktionen je nach Bedarf wahlweise und auswechselbar eingesetzt werden. Beispielsweise könnte die Moduleinheit dezentrale Feldkomponenten enthalten, um sensorische Aufgaben lösen zu können, und zwar beispielsweise eine dezentrale Erfassung von Temperaturen. Ferner könnten von der Moduleinheit auch Positionieraufgaben übernommen werden. Schließlich eignet sich die Moduleinheit auch für die Umwandlung und Weiterleitung von Energie zur Energieversorgung der elektrischen Verbraucher am Grundkörper.

Bei einer weiteren bevorzugten Weiterbildung der zuvor genannten Ausführung hat die Moduleinheit im Wesentlichen die Form einer Scheibe und/oder ist die Moduleinheit als Deckel ausgebildet, die bzw. der an einer den ersten Abschnitt des Grundkörpers begrenzenden Stirnseite angeordnet ist. Auf diese Weise lässt sich die Moduleinheit besonders platzsparend ausführen und am Grundkörper anordnen.

Des Weiteren kann es zweckmäßig sein, mehrere Moduleinheiten vorzusehen und modular hintereinander anzuordnen. Gerade bei dieser Weiterbildung können mehrere Moduleinheiten in unterschiedlichen standardisierten Ausführungen vorgehalten werden, beispielsweise eine Moduleinheit zur Umwandlung und Weiterleitung von Energie zur Energieversorgung eines elektrischen Verbrauchers, ein weiteres Modul für die Datenübertragung und weitere Module jeweils für unterschiedliche Sensoraufgaben. Für die im Einzelfall erforderlichen Funktionen können dann die Moduleinheiten entsprechend zusammengestellt werden. Prinzipiell ist die 'modulare Kette' der hintereinander anzuordnen Moduleinheiten beliebig erweiterbar und wird nur durch die maximale Leistung und/oder den bereitstehenden Bauraum begrenzt.

Bevorzugt weist mindestens eine Moduleinheit wenigstens eine, vorzugsweise mit dem Grundkörper umlaufende, Prüfeinrichtung auf.

Ebenfalls kann bevorzugt mindestens ein Verbraucher wenigstens eine, vorzugsweise mit dem Grundkörper umlaufende, Prüfeinrichtung aufweisen.

Eine weitere bevorzugte Ausführung, bei welcher die in der Drehübertragungseinheit enthaltene Energie- und/oder Datensignalübertragungsmittel erste Energieübertragungsmittel zur Energieversorgung des elektrischen Verbrauchers und Datensignalübertragungsmittel zur Übertragung von Signalen zu oder von dem elektrischen Verbraucher enthält, zeichnet sich dadurch aus, dass die Übertragungseinrichtung zusätzlich eine ortsfeste erste Schnittstelleneinheit und eine dem Grundkörper zugeordnete zweite Schnittstelleneinheit aufweist, die erste Schnittstelleneinheit über eine elektrische Leitung an das Primärteil der Drehübertragungseinheit angeschlossen und zur Einspeisung einer ersten elektrischen Versorgungsspannung für die Energieversorgung des elektrischen Verbrauchers in die ersten Energieübertragungsmittel und die zweite Schnittstelleneinheit zur Weiterleitung der von den ersten Energieübertragungsmitteln erhaltenen Energie zu dem mindestens einen elektrischen Verbraucher ausgebildet ist, die erste Schnittstelleneinheit Modulationsmittel, die die von der ersten Schnittstelleneinheit empfangenen, ein bestimmtes Datenformat aufweisenden Daten in für die Übertragung über die Drehübertragungseinheit geeignete proprietäre Signale konvertieren, und/oder Demodulationsmittel aufweist, die von der Drehübertragungseinheit erhaltenen proprietären Signale in das bestimmte Datenformat aufweisende Daten zurückwandeln, und die zweite Schnittstelleneinheit Modulationsmittel, die die von der zweiten Schnittstelleneinheit empfangenen, das bestimmte Datenformat aufweisenden Datensignale in für die Übertragung über die Drehübertragungseinheit geeignete proprietäre Signale konvertieren, und/oder Demodulationsmittel aufweist, die von der Drehübertragungseinheit erhaltenen proprietären Signale in das bestimmte Datenformat aufweisende Datensignale zurückwandeln.

Zwar werden die Leistung und die Daten gemeinsam über die Drehübertragungseinheit übertragen; jedoch sind im Übrigen die Leistungs- und Datensignalstrecken im Wesentlichen voneinander getrennt, wobei bevorzugt zusätzlich zu einer ersten Leistungsstrecke zur Übertragung von Energie zur Versorgung der elektrischen Verbraucher eine zweite Leistungsstrecke zur Übertragung von Hilfsenergie für die Datensignalverarbeitungseinrichtung vorgesehen ist. Es wurde gefunden, dass mit einer solchen Lösung ein schnelles Anfahren der elektrischen Verbraucher und somit letztendlich der gesamten Vorrichtung oder Anlage ermöglicht wird, indem trotz Unterbrechung des Betriebes durch Abschalten der Leistungsstrecke und somit der elektrischen Verbraucher die Datensignalstrecke weiterhin aktiv bleibt. Denn es hat sich herausgestellt, dass im Falle einer gleichzeitigen Abschaltung und somit Unterbrechung der Datensignalstrecke bei Wiederanschaltung und Reaktivierung der Datensignalstrecke das Hochfahren der Signaldatenübertragung und -verarbeitung eine gewisse Zeit in Anspruch nimmt, was sich negativ auf das Anfahrverhalten und die Betriebsbereitschaft der gesamten Vorrichtung oder Anlage auswirken kann.

Ein weiteres Charakteristikum dieser Ausführung besteht darin, dass wesentliche Funktionen, die bislang in einer herkömmlichen Drehübertragungseinheit implementiert sind, aus der Drehübertragungseinheit in die erfindungsgemäß vorgesehene ortsfeste erste Schnittstelleneinheit und die ebenfalls erfindungsgemäß vorgesehene dem Grundkörper zugeordnete zweite Schnittstelleneinheit ausgelagert sind. Im Zusammenhang mit der erfindungsgemäßen Auslagerung der Funktionen kann bevorzugt eine Hybridleitung vorgesehen werden, in der die Leistungs- und Datensignalstrecken im Form von Leistungs- und Datensignalleitungen kombiniert geführt sind, womit erreicht wird, dass die beiden Schnittstelleneinheiten und die Drehübertragungseinheit nur über ein einzelnes Kabel miteinander verbunden werden können. Die Auslagerung von Funktionen aus der Drehübertragungseinheit in die Schnittstelleneinheiten führt zu einer deutlichen Reduzierung der Bauform der Drehübertragungseinheit, was gerade für die erfindungsgemäße Implementierung der Drehübertragungseinheit am oder im zweiten Abschnitt der Antriebseinheit ein erheblicher Vorteil ist . Durch die Konvertierung der ein verwendetes bestimmtes Datenformat aufweisenden Daten in für die Übertragung über die Drehübertragungseinheit geeignete proprietäre Signale lassen sich die Daten auf einfache und zuverlässige Weise ohne durch das verwendete bestimmte Datenformat vorgegebene Zwänge übertragen.

Da das erfindungsgemäße System aus Drehübertragungseinheit und den beiden Schnittstelleneinheiten nach außen wie eine herkömmliche Drehübertragungseinheit erscheint, ermöglicht auch diese Ausführung des Weiteren eine einfache Einbindbarkeit in eine bestehende Maschinenautomatisierung. Dieser Vorteil kommt insbesondere dann zum Tragen, wenn die zweite Schnittstelleneinheit zumindest als Teil der Versorgungseinrichtung in der zuvor erwähnten Moduleinheit enthalten ist.

Der zuletzt genannte Vorteil wirkt sich des Weiteren insbesondere auch dann besonders positiv aus, wenn eine an die Datensignalübertragungsmittel angeschlossene und mit dem mindestens einen elektrischen Verbraucher gekoppelte Datensignalverarbeitungseinrichtung vorgesehen ist und zur Übertragung der das bestimmte Datenformat aufweisenden Daten ein Datenbus an die erste Schnittstelleneinheit angeschlossen ist und der gleiche Datenbus die zweite Schnittstelleneinheit mit der Datensignalverarbeitungseinrichtung verbindet. Als Datenbus eignet sich bevorzugt der EtherCAT-Bus. Auch hier ist es aus Gründen der einfachen Einbindbarkeit in eine bestehende Maschinenautomatisierung von Vorteil, die Datensignalverarbeitungseinrichtung zumindest als Teil der Versorgungseinrichtung in die zuvor erwähnte Moduleinheit zu integrieren.

Eine weitere bevorzugte Ausführung der Erfindung zeichnet sich dadurch aus, dass die erste elektrische Versorgungsspannung eine Wechselspannung ist, die erste Schnittstelleneinheit einen Gleichrichter aufweist, der die erste Versorgungsspannung in eine Gleichspannung umwandelt, die über die elektrische Leitung dem Primärteil der Drehübertragungseinheit zugeführt wird, in der ersten Schnittstelleneinheit oder im Primärteil der Drehübertragungseinheit Wechselrichtermittel zur Umwandlung der umgewandelten Gleichspannung in eine für die Übertragung auf das Sekundärteil der Drehübertragungseinheit geeignete erste Wechselspannung vorgesehen sind, und die zweite Schnittstelleneinheit Gleichrichtermittel aufweist, die die erste Wechselspannung in eine erste Ausgangsgleichspannung zur Versorgung des mindestens einen elektrischen Verbrauchers umwandelt. Durch die Verwendung von Gleichspannung zur Übertragung der benötigten elektrischen Leistung von der ersten Schnittstelleneinheit zum Primärteil der Drehübertragungseinheit und anschließend von der zweiten Schnittstelleneinheit in Richtung zum elektrischen Verbraucher lassen sich die ansonsten bei Wechselstromleitungen auftretenden induktiven und kapazitiven Verluste vermeiden.

Bei einer Weiterbildung der zuvor erwähnten bevorzugten Ausführung ist mindestens ein Leistungsstromrichter vorgesehen, der zwischen der zweiten Schnittstelleneinheit und dem mindestens einen elektrischen Verbraucher geschaltet ist. Dabei hat eine Anordnung der Leistungsstromrichter getrennt von der zweiten Schnittstelleneinheit am oder im Grundkörper bauliche Vorteile, da die einzelnen dieser Komponenten für sich genommen einen verhältnismäßig geringen Bauraum beanspruchen. Auch hier ist es aus Gründen der einfachen Einbindbarkeit in eine bestehende Maschinenautomatisierung von Vorteil, die Leistungsstromrichter zumindest als Teil der Versorgungseinrichtung in der zuvor erwähnten Moduleinheit zu vorzusehen.

Eine weitere alternative Ausführung, bei welcher die in der Drehübertragungseinheit enthaltene Energie- und/oder Datensignalübertragungsmittel erste Energieübertragungsmittel zur Energieversorgung des elektrischen Verbrauchers und Datensignalübertragungsmittel zur Übertragung von Signalen zu oder von dem elektrischen Verbraucher enthält, zeichnet sich dadurch aus, dass eine an die Datensignalübertragungsmittel angeschlossene und mit dem mindestens einen elektrischen Verbraucher gekoppelte Datensignalverarbeitungseinrichtung vorgesehen ist und die Drehübertragungseinheit zweite Energieübertragungsmittel zur getrennten Energieversorgung der Datensignalverarbeitungseinrichtung enthält.

Durch die Verwendung von zweiten Energieübertragungsmitteln lässt sich bei dieser Ausführung eine von den übrigen Übertragungsstrecken unabhängige und dadurch besonders zuverlässige Versorgung der Datensignalverarbeitungseinrichtung und deren Komponenten mit der für sie benötigten Energie realisieren, die in Abgrenzung zur Versorgung der elektrischen Verbraucher mit verhältnismäßig hoher Energie auch als Hilfsenergie bezeichnet werden kann. Somit wird auf besonders zuverlässige Weise gewährleistet, dass auch bei Abschalten der elektrischen Verbraucher durch Unterbrechung der ersten Energieübertragungsmittel die Datensignalverarbeitungseinrichtung weiterhin sicher mit Energie versorgt wird. Dadurch bleibt weiterhin die Datensignalverarbeitungseinrichtung einsatzbereit und muss bei Anschalten der elektrischen Verbraucher durch Reaktivierung der ersten Energieübertragungsmittel nicht neu anlaufen, wodurch die gesamte Vorrichtung oder Anlage sich wesentlich zügiger hochfahren lässt und somit deutlich schneller einsatzbereit ist.

Demnach enthält bei dieser Ausführung die Drehübertragungseinheit drei Strecken, nämlich eine erste Leistungsstrecke zur Übertragung der Energie zur Versorgung der elektrischen Verbraucher, eine zweite Leistungsstrecke zur Übertragung der Hilfsenergie für die Datensignalverarbeitungseinrichtung und eine Datensignalstrecke.

Vorzugsweise ist die Datensignalverarbeitungseinrichtung zumindest als Teil der Versorgungseinrichtung in der zuvor erwähnten Moduleinheit enthalten, was nicht nur bauliche Vorteile bringt, sondern auch eine besonders einfache Einbindung in eine bestehende Vorrichtung ermöglicht.

Bevorzugt sollte die erste Schnittstelleneinheit zur zusätzlichen Einspeisung einer zweiten elektrischen Versorgungsspannung für die getrennte Energieversorgung der Datensignalverarbeitungseinrichtung und die zweite Schnittstelleneinheit zur Weiterleitung der über die zweiten Energieübertragungsmittel erhaltenen Hilfsenergie an die Datensignalverarbeitungseinrichtung ausgebildet sein. Dabei kann auch diese zweite elektrische Versorgungsspannung eine Gleichspannung sein.

Eine besonders bevorzugte Ausführung der Erfindung zeichnet sich dadurch aus, dass die Drehübertragungseinheit als kontaktlose Drehübertragungseinheit ausgebildet ist, wobei vorzugsweise die Energieübertragungsmittel induktiv und/oder die Datensignalübertragungsmittel kapazitiv und/oder optisch arbeiten. Beispielsweise ist auch eine kombinierte kapazitiv-optische Datenübertragung denkbar, indem die Datensignalstrecke eine kapazitive Teilstrecke zur Übertragung von internen Signalen und eine optische Teilstrecke zur Übertragung von Nutzdaten aufweist. Der Vorteil einer kontaktlosen Drehübertragungseinheit liegt in ihrem deutlich geringeren Verschleiß gegenüber einer Drehübertragungseinheit, die klassische kontaktierende Schleifringe verwendet.

Eine weitere bevorzugte Ausführung weist eine Sicherheitseinrichtung auf, die in einem ersten Betriebszustand eine Berührung von kritischen und insbesondere gesundheitsgefährdenden Teilen der Vorrichtung während deren Betriebes verhindert und in einem zweiten Betriebszustand Zugriff auf diese Teile während des Stillstandes der Vorrichtung erlaubt, und ist dadurch gekennzeichnet, dass die Sicherheitseinrichtung so ausgebildet ist, dass sie in ihrem ersten Betriebszustand die Funktion der ersten und zweiten Energieübertragungsmittel und der Datensignalübertragungsmittel unbeeinflusst lässt und in ihrem zweiten Betriebszustand eine Deaktivierung oder Abschaltung der ersten Energieübertragungsmittel bewirkt, jedoch weiterhin die Funktion der zweiten Energieübertragungsmittel und der Datensignalübertragungsmittel unbeeinflusst lässt. Während demnach der erste Betriebszustand den sog. Normalzustand bildet, in dem die Vorrichtung ohne jegliche Unterbrechungen oder Störungen normal arbeitet, definiert der zweite Betriebszustand einen Zustand, in dem beispielsweise wegen Wartungsarbeiten oder aufgrund eines Störfalles die elektrischen Verbraucher abgeschaltet sind und somit die Vorrichtung stillsteht. Muss die Sicherheitseinrichtung eingreifen und aktiv werden, so bewirkt sie erfindungsgemäß nur die Abschaltung der ersten Energieübertragungsmittel, wodurch nur die elektrischen Verbraucher abgeschaltet werden und somit dann die als berührungsgefährlich einzustufende elektrische Energie nicht mehr zur Verfügung steht. Demgegenüber lässt die erfindungsgemäße Sicherheitseinrichtung die Funktion der zweiten Energieübertragungsmittel und der Datensignalübertragungsmittel unbeeinflusst, so dass auch im Unterbrechungs- oder Störungsfalle die Datensignalverarbeitungseinrichtung weiterhin aktiv und erreichbar und somit eine schnelle Einsatzbereitschaft der gesamten Vorrichtung gewährleistet bleibt.

Bei einer Weiterbildung der zuvor erwähnten Ausführung weist die Sicherheitseinrichtung mindestens eine Abdeckung, die im ersten Betriebszustand geschlossen und im zweiten Betriebszustand geöffnet ist, und eine Überwachungseinheit auf, die bei Öffnen der Abdeckung die ersten Übertragungsmittel abschaltet oder zumindest deaktiviert. Dabei kann die Überwachungseinheit einen auf das Öffnen der Abdeckung ansprechenden Sensor und ein Sicherheitsrelais aufweisen.

Bevorzugt kann die Sicherheitseinrichtung auch so ausgebildet sein, dass sie in ihrem zweiten Betriebszustand eine Abschaltung der ersten elektrischen Versorgungsspannung vor Einspeisung in die erste Schnittstelleneinheit bewirkt und somit an einer Stelle der Energiezufuhr bereits vor der ersten Schnittstelleneinheit eingreift.

Nachfolgend wird ein bevorzugtes Ausführungsbeispiel der Erfindung anhand der beiliegenden Zeichnungen näher erläutert. Es zeigen:
- Fig. 1: schematisch in perspektivischer Ansicht eine Vorrichtung zum Prüfen, Bearbeiten und/oder Fördern von Artikeln der Tabak verarbeitenden Industrie gemäß einem bevorzugten Ausführungsbeispiel;
- Fig. 2: die Vorrichtung von Fig. 1 in einem schematischen Längsschnitt;
- Fig. 3: in einer vereinfachten schematischen Darstellung die Implementierung einer Übertragungseinrichtung in die Vorrichtung gemäß den Figuren 1 und 2, wobei die Orientierung in der Darstellung gegenüber den Darstellungen in den Figuren 1 und 2 entgegengesetzt ist und somit "rechts" und "links" gegeneinander vertauscht sind;
- Fig. 4: eine schematische blockschaltbildähnliche Funktionsdarstellung der Übertragungseinrichtung in der gleichen Orientierung wie Fig. 3; und
- Fig. 5: eine grobschematische blockschaltbildähnliche Übersicht über den Aufbau der Vorrichtung gemäß den Figuren 1 und 2 in derselben Ori-entierung wie Fig. 3.

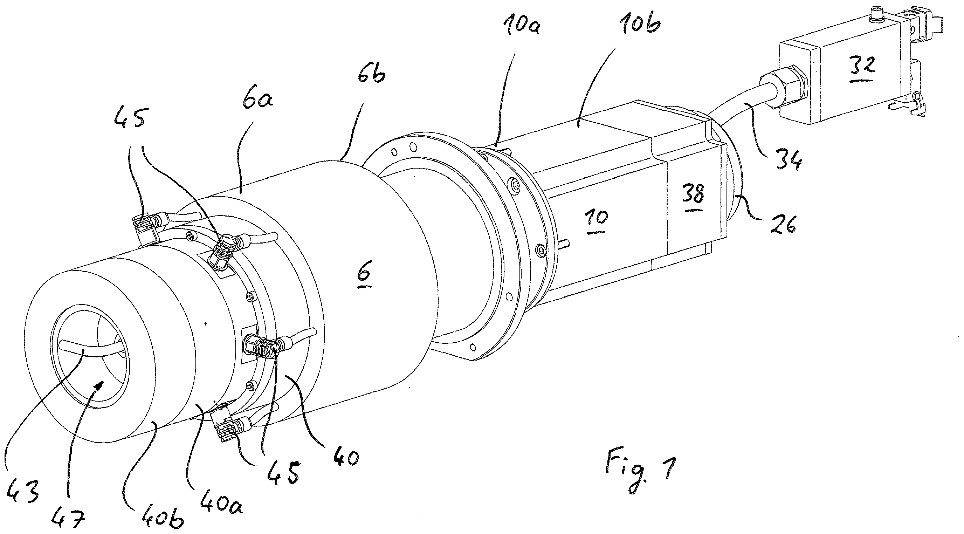

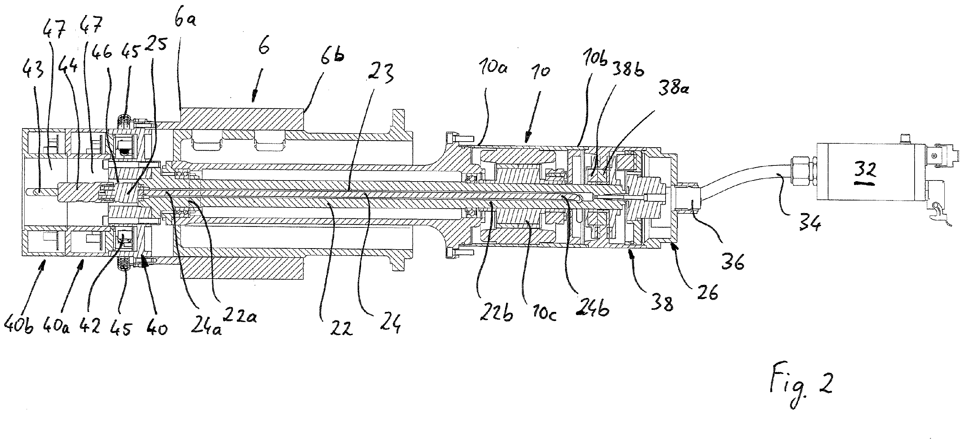

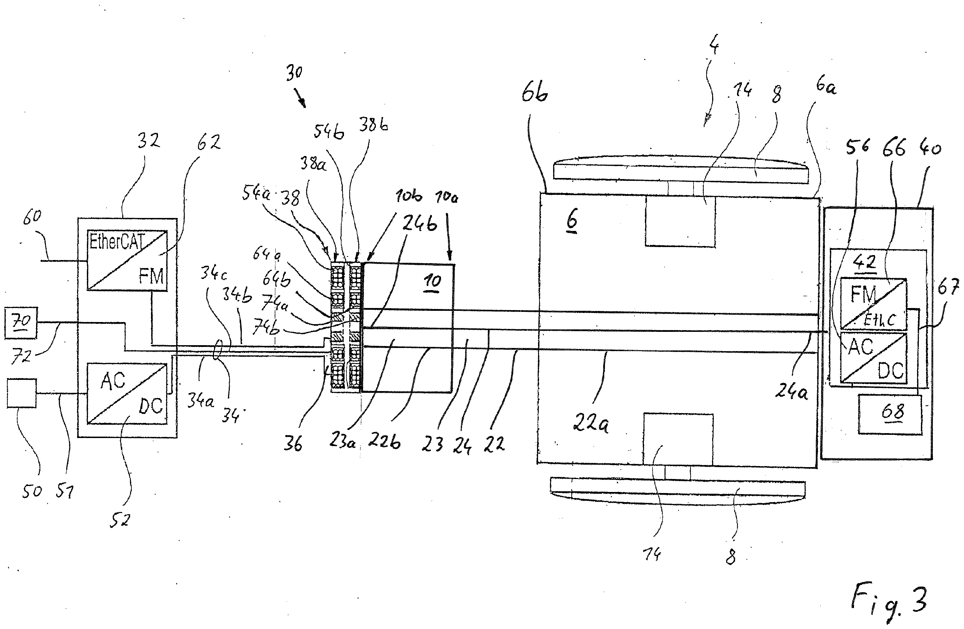

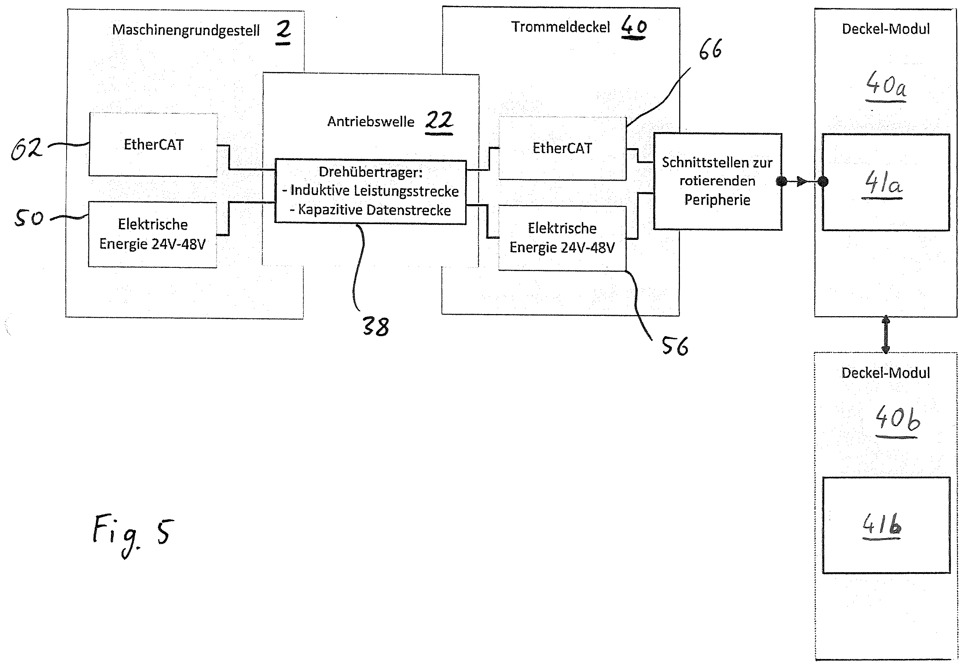

In den Figuren ist schematisch ein bevorzugtes Ausführungsbeispiel einer erfindungsgemäßen Vorrichtung zum Prüfen, Bearbeiten und/oder Fördern von Artikeln der Tabak verarbeitenden Industrie dargestellt. Die Vorrichtung weist ein Maschinengrundgestell 2 auf, das nur in Fig. 5 schematisch gezeigt und an dem eine Trommel drehbar gelagert ist, die im dargestellten Ausführungsbeispiel als Wendetrommel 4 ausgebildet und nur in Fig. 3 schematisch gezeigt ist. Wie Fig. 3 ferner erkennen lässt, weist die Wendetrommel 4 einen rotierenden Grundkörper 6 auf, an dem über seinen Umfang verteilt Drehteller 8 angeordnet sind. Die Drehteller 8 sind am Grundkörper 6 um eine in den Figuren nicht gezeigte Drehachse drehbar gelagert, die in Bezug auf die ebenfalls in den Figuren nicht dargestellte Rotationsachse des Grundkörpers 6 radial orientiert ist. Die Drehteller 8 sind an ihrer Oberfläche mit mehreren parallel nebeneinanderliegenden, in den Figuren nicht abgebildeten Mulden zur Aufnahme von Zigaretten versehen. Nur der guten Vollständigkeit halber sei an dieser Stelle angemerkt, dass der Grundkörper 6, der als solcher ohne Drehteller und sonstige Bauteile auch in den Figuren 1 und 2 gezeigt ist, beispielsweise alternativ auch Teil einer Schiebetrommel, Spreiztrommel oder rotierenden Schneideeinrichtung oder eines Prüfkarussells oder Messerträgers sein kann.

Rotierend angetrieben wird der Grundkörper 6 von einem Elektromotor 10, der in den Figuren 1 bis 3 schematisch abgebildet ist. Die Drehteller 8 werden demgegenüber von eigenen Elektromotoren 14 rotierend angetrieben, die innerhalb des Grundkörpers 6 angeordnet sind, wie nur Fig. 3 schematisch erkennen lässt. Die die Drehteller 8 in Rotation versetzenden Elektromotoren 14 innerhalb des Grundkörpers 6 arbeiten grundsätzlich unabhängig voneinander sowie ebenfalls unabhängig von dem den rotierenden Grundkörper 6 antreibenden Elektromotor 10. Die Elektromotoren 14 bilden elektrische Verbraucher und werden mit Energie und Steuersignalen über eine Übertragungseinrichtung versorgt, die in einer bevorzugten Ausführung gemäß der Erfindung vorgesehen und nachfolgend näher erläutert wird, wobei bereits an dieser Stelle der guten Vollständigkeit halber darauf hingewiesen wird, dass diese Übertragungseinrichtung grundsätzlich geeignet ist, auch zur Versorgung anderer am oder im Grundkörper 6 vorzusehender elektrischer Verbraucher verwendet zu werden.

Wie die Figuren 1 bis 3 ferner schematisch erkennen lassen, weist der Elektromotor 10 einen ersten Endabschnitt 10a, der im Einbauzustand des Elektromotors 10 in den meisten Fällen einen vorderen Endabschnitt bzw. ein vorderes Ende bildet, und einen zweiten Endabschnitt 10b auf, der im Einbauzustand des Elektromotors 10 in den meisten Fällen den hinteren Endabschnitt bzw. das hintere Ende des Elektromotors 10 bildet. In gleicher Orientierung weist der Grundkörper 6 einen ersten Endabschnitt 6a, der im Einbauzustand des Grundkörpers 6 in den meisten Fällen den vorderen Endabschnitt bzw. das vordere Ende des Grundkörpers 6 bildet, und einen zweiten Endabschnitt 6b auf, der im Einbauzustand des Grundkörpers 6 in den meisten Fällen den hinteren Endabschnitt bzw. das hintere Ende des Grundkörpers 6 bildet. Der Grundkörper 6 ist über eine Antriebswelle 22 mit dem Elektromotor 10 verbunden. In gleicher Orientierung wie der Grundkörper 6 und der Elektromotor 10 weist die Antriebswelle 22 einen ersten Endabschnitt 22a, der im Einbauzustand des Elektromotors 10 in den meisten Fällen den vorderen Endabschnitt bildet, und einen zweiten Endabschnitt 22b auf, der im Einbauzustand des Elektromotors 10 in den meisten Fällen den hinteren Endabschnitt bildet. Der Grundkörper 6 ist drehfest mit der Antriebswelle 22 im Bereich deren ersten Endabschnittes 22a gekoppelt, während der zweite Endabschnitt 22b der Antriebswelle 22 konzentrisch und drehfest mit dem Rotor des Elektromotors 10 gekoppelt ist. Somit rotieren der Rotor des Elektromotors 10, die Antriebswelle 22 und der Grundkörper 6 um dieselbe Drehachse, die jedoch in den Figuren nicht dargestellt ist. Dabei bilden der Elektromotor 10, die Antriebswelle 22 und der Grundkörper 6 eine gemeinsame Baugruppe, deren vorderes Ende im Einbauzustand dieser Baugruppe in den meisten Fällen vom ersten Endabschnitt 6a des Grundkörpers 6 gebildet wird und deren hinteres Ende im Einbauzustand dieser Baugruppe in den meisten Fällen vom zweiten Endabschnitt 10b des Elektromotors 10 gebildet wird. Eine solche Baugruppe wird gewöhnlich in einer Orientierung quer zur Prozessrichtung und somit zur Längserstreckung der Anlage eingebaut, sodass deren vorderes Ende für den Benutzer und insbesondere das Wartungspersonal frei zugänglich ist, während deren hinteres Ende auf die Rückwand der Maschine oder Anlage orientiert ist und insoweit versteckt liegt.

Wie die Figuren 2 und 3 ferner schematisch erkennen lassen, ist die Antriebswelle 22 als Hohlwelle ausgebildet und enthält somit einen sich axial erstreckenden Hohlraum 23, in dem elektrische Leitungen 24 geführt sind. Im dargestellten Ausführungsbeispiel erstreckt sich die Antriebswelle 22 im Wesentlichen durch den gesamten Grundkörper 6 hindurch bis zu dessen erstem Endabschnitt 6a, wo das entsprechende Ende 24a der elektrischen Leitungen 24 an einen Steckverbinder 25 einer ersten Art angeschlossen ist. Die Antriebswelle 22 endet im dargestellten Ausführungsbeispiel mit ihrem zweiten Endabschnitt 22b im Bereich des Elektromotors 10, wo die Antriebswelle 22 mit dem Rotor 10c (Fig. 2) des Elektromotors 10 drehfest gekoppelt ist. Hierzu erstreckt sich im dargestellten Ausführungsbeispiel gemäß Fig. 2 die Antriebswelle 22 durch den Rotor 10c des Elektromotors 10 bis in dessen zweiten Endabschnitt 10b. Alternativ ist es aber auch denkbar, dass der Elektromotor 10 bzw. dessen Rotor 10c ebenfalls einen Hohlraum enthält, der mit dem Hohlraum 23 der Antriebswelle 22 fluchtet, sodass auch durch diesen zusätzlichen Hohlraum im Elektromotor 10 die elektrischen Leitungen 24 geführt sind.

Wie die Figuren 1 und 2 des Weiteren erkennen lassen, ist im dargestellten Ausführungsbeispiel noch ein Drehzahlsensor 26 vorgesehen, der im Bereich des zweiten Endabschnittes 10b des Elektromotors 10 bzw. benachbart zu diesem vorgesehen und angeordnet ist.

Wie bereits zuvor kurz angesprochen, ist zur Energieversorgung und Ansteuerung der Elektromotoren 14 eine geeignete Übertragungseinrichtung vorzusehen. Wegen der Besonderheit, dass die zu versorgenden Elektromotoren 14 innerhalb des rotierenden Grundkörpers 6 angeordnet sind, ist die Übertragungseinrichtung entsprechend auszubilden, die Energie- und Signaldatenübertragung von einer stationären Umgebung in eine rotierende Umgebung zu übertragen.

Eine solche Übertragungseinrichtung 30 ist in den Figuren 3 bis 5 nach Art eines Blockschaltbildes schematisch gezeigt. Hiernach weist die dargestellte Übertragungseinrichtung 30 eine stationäre erste Schnittstelleneinheit 32 auf, die, wie auch Fig. 2 zusätzlich erkennen lässt, außerhalb der aus dem Elektromotor 10, der Antriebswelle 22 und dem Grundkörper 6 gebildeten Baugruppe stationär angeordnet ist und deshalb auch als sog. "Statorbox" oder "Statorsystem" bezeichnet werden kann. Von dieser ersten Schnittstelleneinheit 32 führt ein Hybridkabel 34 über eine Hybridsteckverbindung 36 zu einem stationären Primärteil 38a eines kontaktlosen Drehübertragers 38, der ebenfalls Bestandteil der Übertragungseinrichtung 30 ist. Wie die Figuren 1 bis 3 schematisch erkennen lassen, ist der Drehübertrager 38 am zweiten Endabschnitt 10b des Elektromotors 10 angeordnet, und zwar gemäß dem in den Figuren 1 und 2 abgebildeten Ausführungsbeispiel zwischen dem Drehzahlsensor 26 und dem Elektromotor 10 bzw. dessen Stator-Rotor-Anordnung. Dabei ist der stationäre Primärteil 38a des Drehübertragers 38 stationär angeordnet bzw. gegenüber dem nur in Fig. 5 schematisch dargestellten Maschinengrundgestell 2 drehfest fixiert.

Wie die Figuren 2 bis 4 ferner schematisch erkennen lassen, weist der kontaktlose Drehübertrager 38 ein rotierendes Sekundärteil 38b auf, das drehfest mit dem zweiten Endabschnitt 22b der Antriebswelle 22 gekoppelt ist. Im dargestellten Ausführungsbeispiel fällt die nicht dargestellte Drehachse des rotierenden Sekundärteils 38b des Drehübertragers 38 mit der gemeinsamen Drehachse des Rotors 10c des Elektromotors 10, der Antriebswelle 22 und des Grundkörpers 6 zusammen, sodass das rotierende Sekundärteil 38b des Drehübertragers 38 konzentrisch zur Antriebswelle 22 angeordnet ist. Wie die Figuren 2 und 3 schematisch erkennen lassen, ist am Sekundärteil 38b des Drehübertragers 38 das zweite Ende 24b der elektrischen Leitung 24 angeschlossen, welche ja durch den Hohlraum 23 in der Antriebswelle 22 bis zum ersten Endabschnitt 6a des Grundkörpers 6 geführt ist.

An der den ersten Endabschnitt 6a des Grundkörpers 6 begrenzenden Stirnseite des Grundkörpers 6 ist eine scheibenförmige Moduleinheit 40 angeordnet, die somit die Stirnseite des Grundkörpers 6 verdeckt. Aufgrund ihrer Scheibenform und der Anordnung an der Stirnseite des Grundkörpers 6 kann die Moduleinheit 40 auch als Trommeldeckel bezeichnet werden. Alternativ ist es aber auch grundsätzlich denkbar, einen vorhandenen Trommeldeckel für die Ausbildung als Moduleinheit 40 zu verwenden. Die Moduleinheit 40 enthält eine zweite Schnittstelleneinheit 42, die über ein Anschlusskabel 43 und einen an deren Ende installierten Steckverbinder 44 einer zweiten Art an den Steckverbinder 25 der ersten Art an dem aus dem ersten Endabschnitt 22a der hohlen Antriebswelle 22 herausgeführten ersten Ende 24a der elektrischen Leitung 22 angeschlossen wird. Wie die Figuren 1 und 2 ferner erkennen lassen, wird das Anschlusskabel 43 außermittig aus der Moduleinheit 40 herausgeführt, während das erste Ende 24a der in der hohlen Antriebswelle 22 geführten elektrischen Leitung 24 und der daran installierte Steckverbinder 25 der ersten Art im Wesentlichen mittig oder symmetrisch und somit auf der gemeinsamen Drehachse von Elektromotor 10, Antriebswelle 22 und Grundkörper 6 angeordnet ist. Ferner sind im dargestellten Ausführungsbeispiel entlang des Umfanges der scheibenförmigen Moduleinheit 40 mehrere weitere Steckverbinder 45 angeordnet, die zusätzliche Anschlussmöglichkeiten für die in der Moduleinheit 40 enthaltene zweite Schnittstelleneinheit 42 bilden. Wegen der Integration in die Moduleinheit 40 kann die zweite Schnittstelleneinheit 42 alternativ auch als sog. "Rotorelektronik" bezeichnet werden. Von der zweiten Schnittstelleneinheit 42 kann ein in den Figuren nicht dargestelltes Anschlusskabel zu in den Figuren ebenfalls nicht dargestellten Leistungsstromrichtern zur Versorgung der Elektromotoren 14 im Grundkörper 6 führen. Hierzu können die Leistungsstromrichter im Grundkörper 6 angeordnet sein. Alternativ ist es aber auch denkbar, die Leistungsstromrichter in der Moduleinheit 40 anzuordnen.

Für die Erzielung einer größeren Flexibilität ist es von Vorteil, mehrere Moduleinheiten zu verwenden, wodurch es möglich wäre, eine entsprechende Varianz für die Anwendungen zu realisieren oder auch Elektronikplatinen, -komponenten oder -baugruppen zu schachteln. In den Figuren 1, 2 und 5 sind beispielhaft zusätzlich zu der zuvor beschriebenen Moduleinheit 40 noch zwei weitere Moduleinheiten 40a, 40b schematisch angedeutet. Wie des Weiteren aus Fig. 5 schematisch zu entnehmen ist, enthalten die beiden zusätzlichen Moduleinheiten 40a, 40b jeweils eine spezifische Elektronik 41a bzw. 41b, wobei beispielsweise die Elektronik 41a in der zweiten Moduleinheit 40a für eine Temperaturmessung und die Elektronik 41b in der dritten Moduleinheit 40b zur Messung und ggf. auch Steuerung der Winkelstellung der Elektromotoren 14 und der somit von diesen angetriebenen Drehteller 8 vorgesehen sein kann. Wie Fig. 2 ferner erkennen lässt, ist die Moduleinheit 40 mit einer zentralen Durchgangsbohrung 46 versehen, durch die das vordere Ende 24a der elektrischen Leitung 24 mit ihrem Steckverbinder 25 geführt ist. Die beiden zusätzlichen Moduleinheiten 40a, 40b sind im dargestellten Ausführungsbeispiel jeweils in ihrem zentralen Bereich mit einem durchgehenden Hohlraum 47 versehen, so dass gemeinsam mit der in der Moduleinheit 40 ausgebildeten zentralen Durchgangsbohrung 46 ein entsprechender fluchtender Durchlass für die Kabelführung gebildet wird. Vorteilhaft ist es auch, die verschiedenen Moduleinheiten 40, 40a, 40b untereinander mit in den Figuren nicht dargestellten integrierten Steckverbindungen zu verbinden.

Durch die Rotation des Grundkörpers 6 findet eine gute Wärmeableitung von den in der Moduleinheit 40 bzw. in den Moduleinheiten 40, 40a, 40b enthaltenen Elektronikkomponenten über die Luft statt. Insbesondere wenn die Moduleinheit 40 aus Metall und vorzugsweise Aluminium besteht, wird dadurch ein guter Wärmeleiter gebildet.

Nachfolgend wird insbesondere anhand der Figuren 2 bis 5 der Aufbau der Übertragungseinrichtung 30 und die Funktion von deren Komponenten beschrieben.

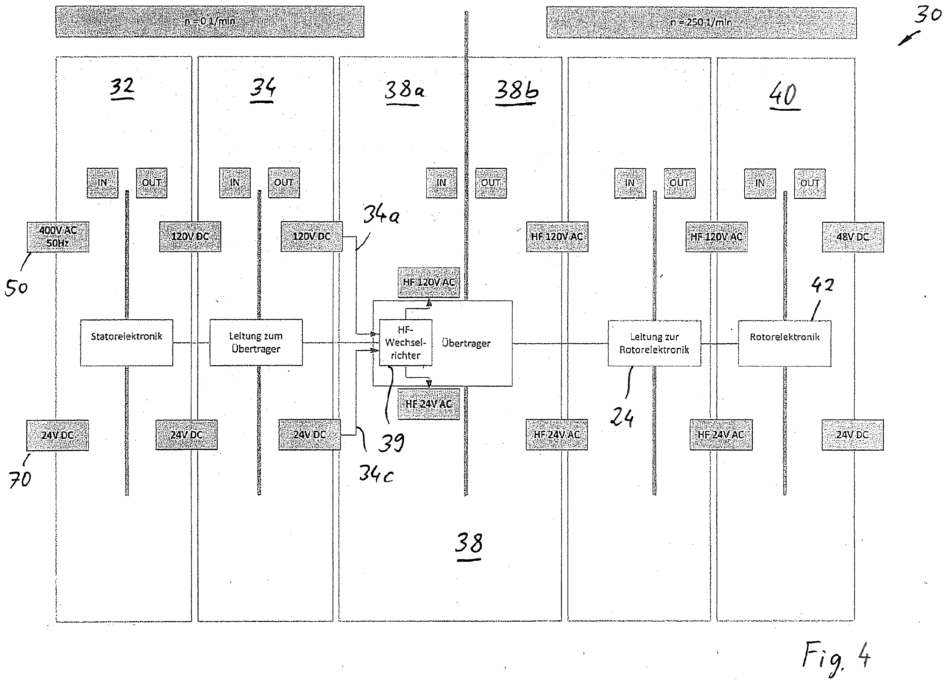

Von einer ortsfesten Spannungsquelle 50 wird über eine elektrische Leitung 51 zur Stromversorgung der Elektromotoren 14 elektrische Energie in die "Statorbox" bzw. die erste Schnittstelleneinheit 32 eingespeist. Als von der Spannungsquelle 50 erzeugte Spannung steht im dargestellten Ausführungsbeispiel eine Wechselspannung zur Verfügung, die bevorzugt im Bereich von 200V bis 450V liegt und insbesondere 400V beträgt, und zwar bevorzugt bei 50Hz. Die erste Schnittstelleneinheit 32 enthält einen Gleichrichter 52, der die Spannung von der Spannungsquelle 50 in eine Gleichspannung umwandelt, die über das Hybridkabel 34 dem Primärteil 38a des Drehübertragers 38 zugeführt wird. Hierzu weist das Hybridkabel 34 eine separate erste Leistungsstrecke in Form einer ersten elektrischen Leitung 34a auf, über die die Gleichspannung vom Gleichrichter 52 in der ersten Schnittstelleneinheit 32 zum Primärteil 38a des Drehübertragers 38 übertragen wird. Bevorzugt liegt diese Gleichspannung in einem Bereich von 24V bis 400V, vorzugsweise 48V bis 250V und hat insbesondere einen Wert von 120V. Wie in Fig. 4 schematisch angedeutet ist, enthält der Drehübertrager 38 einen Wechselrichter 39, der gemäß dem abgebildeten Ausführungsbeispiel im Primärteil 38a des Drehübertragers 38 untergebracht ist. Die zuvor erwähnte, innerhalb des Hybridkabels 34 geführte erste elektrische Leitung 34a ist an diesen Wechselrichter 39 angeschlossen, so dass die über die erste elektrische Leitung 34a übertragene Gleichspannung in eine für die Übertragung auf das Sekundärteil 38b des Drehübertragers 38 geeignete Wechselspannung umgewandelt wird. Bei dieser Wechselspannung handelt es sich bevorzugt um eine hochfrequente Wechselspannung, die bevorzugt in einem Bereich von 48V bis 250V liegt und insbesondere einen Wert von 120V hat. Es ist aber beispielsweise auch denkbar, den Wechselrichter 39 in der ersten Schnittstelleneinheit 32 vorzusehen, so dass in diesem Fall über die erste elektrische Leitung 34a die vom Wechselrichter erzeugte Wechselspannung übertragen wird.

Für die Übertragung dieser Wechselspannung vom Primärteil 38a auf das Sekundärteil 38b des Drehübertragers 38 ist im Drehübertrager 38 eine separate Übertragerstufe mit kontaktlos arbeitenden ersten Energieübertragungsmitteln 54a, 54b vorgesehen, von denen das eine Energieübertragungsmittel 54a im Primärteil 38a und das andere Energieübertragungsmittel 54b im Sekundärteil 38b des Drehübertragers 38 vorgesehen ist. Bevorzugt arbeiten die ersten Energieübertragungsmittel 54a, 54b induktiv. Die von den ersten Energieübertragungsmitteln 54a, 54b kontaktlos übertragene hochfrequente Wechselspannung liegt somit am Ausgang des Sekundärteils 38b des Drehübertragers 38 an und wird von dort über die elektrische Leitung 24 durch die Antriebswelle 22 zur zweiten Schnittstelleneinheit 42 übertragen. Wie in Fig. 3 schematisch dargestellt ist, enthält die zweite Schnittstelleneinheit 42 einen Gleichrichter 56, der die besagte hochfrequente Wechselspannung in Gleichspannung umwandelt, die bevorzugt einen Wert von 48V hat. Diese Gleichspannung wird über das bereits zuvor erwähnte, in den Figuren nicht dargestellte Anschlusskabel zu den ebenfalls bereits zuvor erwähnten, jedoch in den Figuren nicht dargestellten Leistungsstromrichtern übertragen, welche für die Energieversorgung der Elektromotoren 14 vorgesehen sind.

Des Weiteren ist eine Datensignalstrecke vorgesehen, die einen Datenbus 60 aufweist, der an die erste Schnittstelleneinheit 32 angeschlossen ist, wie Fig.3 schematisch erkennen lässt. Über diesen Datenbus 60 werden Daten in einem vorgegebenen bestimmten Datenformat bidirektional übermittelt. Bevorzugt wird als Datenbus ein EtherCAT-Datenbus verwendet. Der Datenbus 60 ist gekoppelt mit einer ersten bidirektionalen Modulationseinrichtung 62, die zusätzlich in der ersten Schnittstelleneinheit 32 vorgesehen ist. Diese bidirektionale Modulationseinrichtung 62 dient zur Modulation und Demodulation von über die Datensignalstrecke übermittelten Signaldaten. Die vom Datenbus empfangenen Daten konvertiert die Modulationseinrichtung 62 in für die Übertragung über den Drehübertrager 38 geeignete proprietäre Signale, wobei die Modulation bevorzugt eine Frequenzmodulation ist. Diese von der Modulationseinrichtung 62 erzeugten proprietären Signale werden über eine Datensignalleitung 34b, die Teil des Hybridkabels 34 ist, wie in Fig. 3 schematisch dargestellt ist, an das Primärteil 38a des Drehübertragers 38 übermittelt. Konkret weist hierzu der Drehübertrager 38 eine weitere separate Übertragerstufe mit kontaktlos arbeitenden Datensignalübertragungsmitteln 64a, 64b auf, von denen das eine Datensignalübertragungsmittel 64a im Primärteil 38a und das andere Datensignalübertragungsmittel 64b im Sekundärteil 38b des Drehübertragers 38 vorgesehen ist. Die Datensignalleitung 34b im Hybridkabel 34 ist somit an das im Primärteil 38a des Drehübertragers 38 vorgesehene Datensignalübertragungsmittel 64a angeschlossen. Bevorzugt arbeiten die Datensignalübertragungsmittel 64a, 64b kapazitiv. Alternativ ist es auch denkbar, die Datensignalübertragungsmittel 64a, 64b und ggf. auch die Datensignalleitung 34b im Hybridkabel 34 für eine optische Übertragung der Datensignale auszubilden. Für den zuletzt genannten Fall, wenn also über die gesamte Datensignalstrecke zwischen den ersten und zweiten Schnittstelleneinheiten 32 und 42 die Übertragung der Signaldaten auf optische Weise erfolgen soll, sind die Modulationseinrichtungen 62 und 66 mit bidirektional arbeitenden Optokopplern zu versehen, die eine Umwandlung zwischen elektrischen und optischen Datensignalen vornehmen. Es ist auch eine kombinierte Anwendung von elektrischer und insbesondere kapazitiver Übertragung und optischer Übertragung denkbar, indem bevorzugt interne Signale elektrisch bzw. kapazitiv und die Nutzdaten optisch übertragen werden.

Wie in Fig. 3 des Weiteren schematisch erkennbar ist, enthält die in der Moduleinheit 40 gemäß den Figuren 1 und 2 enthaltene Schnittstelleneinheit 42 eine zweite bidirektionale Modulationseinrichtung 66, die in gleicher Weise wie die erste Modulationseinrichtung 62 in der stationären ersten Schnittstelleneinheit 32 arbeitet und an das im Sekundärteil 38b des Drehübertragers 38 vorgesehene Datensignalübertragungsmittel 64b angeschlossen ist. Die vom Drehübertrager 38 erhaltenen proprietären Signale werden von der zweiten Modulationseinrichtung 66 in Daten zurückgewandelt, die das bestimmte Datenformat in gleicher Weise wie die auf dem Datenbus 60 vor der stationären ersten Schnittstelleneinheit 32 anliegenden Daten aufweisen. Somit ist am Ausgang der zweiten Modulationseinrichtung 66 ein Datenbus 67 angeschlossen, der dem Datenbus 60 entspricht. Über diesen Datenbus 67 ist die zweite Modulationseinrichtung 66 mit einer Datensignalverarbeitungseinrichtung 68 gekoppelt, die wie die zweite Schnittstelleneinheit 42 in der Moduleinheit 40 angeordnet und zur Ansteuerung der bereits zuvor erwähnten, jedoch in den Figuren nicht dargestellten Stromrichter und somit letztendlich zur Steuerung der Elektromotoren 14 vorgesehen ist.

Die Datensignalverarbeitungseinrichtung 68 arbeitet bidirektional. D.h. sie empfängt und verarbeitet nicht nur über den Datenbus 60 eintreffende Daten, die von der ersten Modulationseinrichtung 62 in der stationären ersten Schnittstelleneinheit 32 umgewandelt, über den Drehübertrager 38 übertragen und von der zweiten Modulationseinrichtung 66 in der zweiten Schnittstelleneinheit 42 wieder entsprechend zurückgewandelt werden, sondern gibt auch Daten in den Datenbus, welche beispielsweise von in den Figuren nicht abgebildeten Sensoren stammen oder das Ergebnis der Verarbeitung von Daten und Signalen von Sensoren sein können, wobei die zugehörige Sensorelektronik und ggf. auch die Sensoren selbst ebenfalls bevorzugt in der Moduleinheit 40 vorzusehen sind. Da auch die zweite Modulationseinrichtung 66 wie die erste Modulationseinrichtung 62 bidirektional arbeitet, werden die von der Datensignalverarbeitungseinrichtung 68 empfangenen Daten in die für die Übertragung über den Drehübertrager 38 geeignete proprietäre Signale konvertiert, die dann von der ersten Modulationseinrichtung 62 entsprechend rückgewandelt werden. Somit sind beide Modulationseinrichtungen 62, 66 in gleicher Weise sowohl zur Modulation als auch zur Demodulation vorgesehen.

Wie die Figuren 3 und 4 des Weiteren erkennen lassen, ist noch eine Hilfsspannungsquelle 70 über eine elektrische Leitung 72 an die stationäre erste Schnittstelleneinheit 32 angeschlossen. Die Hilfsenergiespannungsquelle liefert eine sog. Hilfsspannung bevorzugt als Gleichspannung im Bereich von 12V bis 96V und insbesondere mit einem Betrag von 24V. Diese Hilfsspannung dient zur Energieversorgung der im rotierenden Grundkörper 6 vorgesehenen Datensignalverarbeitungseinrichtung 68. Hierzu wird diese Hilfsspannung im dargestellten Ausführungsbeispiel unverändert von der ersten Schnittstelleneinheit 32 in eine zweite elektrische Leitung 34c eingespeist, die eine weitere Leistungsstrecke bildet und ebenfalls Teil des Hybridkabels 34 ist. Die Hilfsspannung wird im Drehübertrager 38 über eine weitere separate Übertragerstufe übertragen, die aus kontaktlos arbeitenden zweiten Energieübertragungsmitteln 74a, 74b besteht, von denen das eine Energieübertragungsmittel 74a im Primärteil 38a und das andere Energieübertragungsmittel 74b im Sekundärteil 38b des Drehübertragers 38 vorgesehen ist. Die zweiten Energieübertragungsmittel 74a, 74b arbeiten bevorzugt induktiv. Vor Übertragung vom Primärteil 38a auf das Sekundärteil 38b des Drehübertragers 38 wird die Hilfsspannung, die eine Gleichspannung ist, von dem im Drehübertrager 38 primärseitig vorgesehenen Wechselrichter 39 (Fig. 4) in eine Wechselspannung umgewandelt, die ebenfalls bevorzugt im Bereich von 12V bis 96V liegt und insbesondere 24V beträgt. Diese Wechselspannung liegt somit zusätzlich zu der zuvor erwähnten Wechselspannung vor, die zur Energieversorgung der Elektromotoren 14 verwendet wird. Wie zuvor bereits angesprochen, ist es aber beispielsweise auch denkbar, den Wechselrichter 39 in der ersten Schnittstelleneinheit 32 vorzusehen, so dass in diesem Fall auch diese zusätzliche Wechselspannung über die zweite elektrische Leitung 34c übertragen wird. Diese Wechselspannung wird dann nach Übertragung durch den Drehübertrager 38 in der in der Moduleinheit 40 angeordneten zweiten Schnittstelleneinheit 42 durch einen dort zusätzlich vorgesehenen, jedoch in den Figuren nicht dargestellten Gleichrichter in eine der ursprünglichen Hilfsspannung entsprechende Gleichspannung bevorzugt wieder im Bereich von 12V bis 96V und insbesondere mit einem Wert von 24V zurückgewandelt. Mit dieser Spannung wird dann die Datensignalverarbeitungseinrichtung 68 versorgt, wozu ein in den Figuren nicht dargestelltes Anschlusskabel von der zweiten Schnittstelleneinheit 42 zur Datensignalverarbeitungseinrichtung 68 geführt ist.

Unabhängig von der Versorgung der Elektromotoren 14 wird also die Datensignalverarbeitungseinrichtung 68 durch die Hilfsspannungsquelle 70 separat mit Energie versorgt. Da die Datensignalverarbeitungseinrichtung 68 aber nur verhältnismäßig wenig Energie benötigt, beträgt die für die Versorgung der Datensignalverarbeitungseinrichtung 68 zur Verfügung gestellte Energie nur einen Bruchteil der für die Versorgung der Elektromotoren 14 benötigten Energie. Demnach weist die Übertragungseinrichtung 30 eine erste Leistungsstrecke zur Übertragung der Energie von der Spannungsquelle 50 zu den Elektromotoren 14 für deren Versorgung, eine zweite Leistungsstrecke zur Übertragung der Hilfsenergie von der Hilfsspannungsquelle 70 an die Datensignalverarbeitungseinrichtung 68 für deren separate Versorgung und eine Datensignalstrecke zur Kopplung des stationären Datenbusses 60 mit dem im Grundkörper 6 vorgesehenen Datenbus 67 auf. Durch die Verwendung der zweiten Energieübertragungsmittel 74a, 74b wird eine von den übrigen Übertragungsstrecken unabhängige und dadurch besonders zuverlässige Versorgung der Datensignalverarbeitungseinrichtung 68 mit der für sie benötigten Energie realisiert, die in Abgrenzung zur Versorgung der Elektromotoren 14, die ja eine verhältnismäßig hohe Energie benötigt, die Hilfsenergie bildet. Somit wird auf besonders zuverlässige Weise gewährleistet, dass auch bei Abschalten der Elektromotoren 14 die Datensignalverarbeitungseinrichtung 68 weiterhin sicher mit Energie versorgt wird. Dadurch bleibt weiterhin die Datensignalverarbeitungseinrichtung 68 einsatzbereit und muss bei Einschalten der Elektromotoren 14 nicht neu anlaufen, wodurch die gesamte Vorrichtung oder Anlage sich wesentlich zügiger hochfahren lässt und somit deutlich schneller einsatzbereit ist.

Des Weiteren kann bevorzugt eine Sicherheitseinrichtung vorgesehen sein, die in einem ersten Betriebszustand eine Berührung von kritischen und insbesondere gesundheitsgefährdenden Teilen der Vorrichtung während deren Betriebes verhindert und in einem zweiten Betriebszustand Zugriff auf diese Teile während des Stillstandes der Vorrichtung erlaubt. Diese Sicherheitseinrichtung, die in den Figuren nicht dargestellt ist, ist so ausgebildet, dass sie in ihrem ersten Betriebszustand die Funktion der beiden getrennten Leistungsstrecken und der Datensignalstrecke unbeeinflusst lässt und in ihrem zweiten Betriebszustand nur eine Deaktivierung oder Abschaltung der für die Energieversorgung der Elektromotoren 14 vorgesehenen ersten Leistungsstrecke bewirkt, jedoch weiterhin die Funktion der für die Energieversorgung der Datensignalverarbeitungseinrichtung 68 vorgesehenen zweiten Leistungsstrecke und der Datensignalstrecke unbeeinflusst lässt. Während demnach der erste Betriebszustand den sog. Normalzustand bildet, in dem die Vorrichtung ohne jegliche Unterbrechungen oder Störungen normal arbeitet, definiert der zweite Betriebszustand einen Zustand, in dem beispielsweise wegen Wartungsarbeiten oder aufgrund eines Störfalles die Elektromotoren 14 abgeschaltet sind und somit die Vorrichtung stillsteht. Muss die Sicherheitseinrichtung eingreifen und aktiv werden, so bewirkt sie nur die Abschaltung der ersten Leistungsstrecke, wodurch nur die Elektromotoren 14 abgeschaltet werden und somit dann die als besonders gefährlich einzustufende elektrische Energie von der Spannungsquelle 50 nicht mehr zur Verfügung steht. Demgegenüber lässt die Sicherheitseinrichtung die Funktion der zweiten Leistungsstrecke und der Datensignalstrecke unbeeinflusst, so dass auch im Unterbrechungs- oder Störungsfalle die Datensignalverarbeitungseinrichtung 68 weiterhin aktiv und erreichbar und somit eine schnelle Einsatzbereitschaft der gesamten Vorrichtung gewährleistet bleibt.

Bevorzugt weist die Sicherheitseinrichtung mindestens eine Abdeckung, die im ersten Betriebszustand geschlossen und im zweiten Betriebszustand geöffnet ist, und eine Überwachungseinheit auf, die bei Öffnen der Abdeckung die erste Leistungsstrecke abschaltet oder zumindest deaktiviert. Dabei kann die Überwachungseinheit einen auf das Öffnen der Abdeckung ansprechenden Sensor oder ein Sicherheitsrelais aufweisen. Insbesondere kann die Sicherheitseinrichtung so ausgebildet sein, dass sie in ihrem zweiten Betriebszustand eine Abschaltung der Spannungsquelle 50 bewirkt.

## Patentansprüche

1. Vorrichtung zum Prüfen, Bearbeiten und/oder Fördern von Artikeln der Tabak verarbeitenden Industrie, mit
mindestens einem um eine Drehachse rotierend gelagerten Grundkörper (6), an oder in dem mindestens ein elektrischer Verbraucher (14) angeordnet ist,
einer den Grundkörper (6) rotierend antreibenden Antriebseinheit (10), die einen ersten Abschnitt (10a), an dem der Grundkörper (6) mit der Antriebseinheit (10) gekoppelt ist, und einen vom ersten Abschnitt (10a) entfernt gelegenen zweiten Abschnitt (10b) aufweist,
einer mit dem elektrischen Verbraucher (14) gekoppelten Übertragungseinrichtung (30), die eine Drehübertragungseinheit (38) mit einem ortsfesten Primärteil (38a) und einem um eine Drehachse rotierend gelagerten Sekundärteil (38b) aufweist, wobei die Drehübertragungseinheit (38) Energie- und/oder Datensignalübertragungsmittel zur Energieversorgung des elektrischen Verbrauchers (14) und/oder Übertragung von Signalen zu oder von dem elektrischen Verbraucher (14) enthält und wobei die Drehübertragungseinheit (38) am oder im zweiten Abschnitt (10b) der Antriebseinheit (10) angeordnet ist und deren Sekundärteil (38b) mit der Antriebseinheit (10) gekoppelt ist und unmittelbar von dieser rotierend angetrieben wird, und
einer um eine Drehachse rotierenden und von der Antriebseinheit (10) angetriebenen Antriebswelle (22) mit einem ersten Abschnitt (22a), der sich aus dem ersten Abschnitt (10a) der Antriebseinheit (10) erstreckt, und mit einem zweiten Abschnitt (22b), der sich im Bereich des zweiten Abschnittes (10b) der Antriebseinheit (10) befindet, wobei das Sekundärteil (38b) der Drehübertragungseinheit (38) mit dem zweiten Abschnitt (22b) der Antriebswelle (22) drehfest gekoppelt ist, so dass die Drehachse des Sekundärteils (38b) der Drehübertragungseinheit (38) mit der Drehachse der Antriebswelle (22) zusammenfällt.

2. Vorrichtung nach Anspruch 1, **dadurch gekennzeichnet, dass** der Grundkörper (6) mit dem ersten Abschnitt (22a) der Antriebswelle (22) drehfest gekoppelt ist, so dass die Drehachse des Grundkörpers (6) mit der Drehachse der Antriebswelle (22) zusammenfällt.

3. Vorrichtung nach Anspruch 1 oder 2, **dadurch gekennzeichnet, dass** die Antriebswelle (22) hohl ist und mindestens eine, vorzugsweise gegenüber einer Rotation verdrillsicher zentral axial verlegte, elektrische Leitung (24) enthält, die zur Versorgung des elektrischen Verbrauchers (14) vom Sekundärteil (38b) der Drehübertragungseinheit (38) zum Grundkörper (6) führt.

4. Vorrichtung nach mindestens einem der vorangegangenen Ansprüche, **dadurch gekennzeichnet, dass** der Grundkörper (6) einen ersten Abschnitt (6a) und einen zweiten Abschnitt (6b) aufweist, wobei der zweite Abschnitt (6b) des Grundkörpers (6) benachbart zum ersten Abschnitt (10a) der Antriebseinheit (10) und der erste Abschnitt (6a) des Grundkörpers (6) vom zweiten Abschnitt (6b) des Grundkörpers (6) entfernt gelegen ist, und benachbart zum ersten Abschnitt (6a) des Grundkörpers (6) mindestens eine Moduleinheit (40) angeordnet ist, die mindestens eine Versorgungseinrichtung zur Versorgung des elektrischen Verbrauchers (14) aufweist.

5. Vorrichtung nach den Ansprüchen 3 und 4, **dadurch gekennzeichnet, dass** der Grundkörper (6) einen Hohlraum (23) enthält, der sich an den Hohlraum (23) der Antriebswelle (22) anschließt oder den Hohlraum (23) des sich durch den Grundkörper (6) erstreckenden ersten Abschnittes (22a) der Antriebswelle (22) bildet und durch den die elektrische Leitung (24) bis zu der oder in die Moduleinheit (40) geführt ist, wobei insbesondere die Moduleinheit (40) eine Durchgangsöffnung (47) aufweist, die sich an den Hohlraum im Grundkörper (6) anschließt und durch die die elektrische Leitung (24) mit ihrem Ende (24a) geführt ist, wobei dieses Ende (24a) der elektrischen Leitung (24) einen Steckverbinder (25) einer ersten Art aufweist, und mindestens ein Steckverbinder (25) einer zweiten Art an die Versorgungseinrichtung zur Versorgung des elektrischen Verbrauchers (14) angeschlossen und zur Herstellung einer elektrischen Verbindung mit dem mindestens einen Steckverbinder (44) der ersten Art vorgesehen ist, der bevorzugt am Umfang der Moduleinheit (40) angeordnet ist.

6. Vorrichtung nach Anspruch 4 oder 5, **dadurch gekennzeichnet, dass** die Moduleinheit (40) im Wesentlichen die Form einer Scheibe hat und/oder als Deckel ausgebildet ist, der an einer den ersten Abschnitt (6a) des Grundkörpers (6) begrenzenden Stirnseite angeordnet ist.

7. Vorrichtung nach mindestens einem der Ansprüche 4 bis 6, **dadurch gekennzeichnet, dass** mehrere Moduleinheiten (40, 40a, 40b) hintereinander angeordnet sind.

8. Vorrichtung nach mindestens einem der mindestens einem der vorangegangenen Ansprüche, bei welcher die in der Drehübertragungseinheit (38) enthaltene Energie- und/oder Datensignalübertragungsmittel erste Energieübertragungsmittel (54a, 54b) zur Energieversorgung des elektrischen Verbrauchers und Datensignalübertragungsmittel (64a, 64b) zur Übertragung von Signalen zu oder von dem elektrischen Verbraucher (14) enthält, **dadurch gekennzeichnet, dass**
die Übertragungseinrichtung (30) zusätzlich eine ortsfeste erste Schnittstelleneinheit (32) und eine dem Grundkörper (6) zugeordnete zweite Schnittstelleneinheit (42) aufweist,
die erste Schnittstelleneinheit (32) über eine elektrische Leitung (34a) an das Primärteil (38a) der Drehübertragungseinheit (38) angeschlossen und zur Einspeisung einer ersten elektrischen Versorgungsspannung für die Energieversorgung des elektrischen Verbrauchers (14) in die ersten Energieübertragungsmittel (54a, 54b) und die zweite Schnittstelleneinheit (42) zur Weiterleitung der von den ersten Energieübertragungsmitteln (54a, 54b) erhaltenen Energie zu dem mindestens einen elektrischen Verbraucher (14) ausgebildet ist,
die erste Schnittstelleneinheit (32) Modulationsmittel (62), die die von der ersten Schnittstelleneinheit (32) empfangenen, ein bestimmtes Datenformat aufweisenden Daten in für die Übertragung über die Drehübertragungseinheit (38) geeignete proprietäre Signale konvertieren, und/oder Demodulationsmittel aufweist, die von der Drehübertragungseinheit (38) erhaltenen proprietären Signale in das bestimmte Datenformat aufweisende Daten zurückwandeln, und
die zweite Schnittstelleneinheit (42) Modulationsmittel, die die von der zweiten Schnittstelleneinheit (42) empfangenen, das bestimmte Datenformat aufweisenden Datensignale in für die Übertragung über die Drehübertragungseinheit (38) geeignete proprietäre Signale konvertieren, und/oder Demodulationsmittel aufweist, die von der Drehübertragungseinheit (38) erhaltenen proprietären Signale in das bestimmte Datenformat aufweisende Datensignale zurückwandeln.

9. Vorrichtung nach den Ansprüchen 4 und 8,
**dadurch gekennzeichnet, dass** die zweite Schnittstelleneinheit (42) zumindest als Teil der Versorgungseinrichtung in der Moduleinheit (40) enthalten ist.

10. Vorrichtung nach Anspruch 8 oder 9,
**dadurch gekennzeichnet, dass** eine an die Datensignalübertragungsmittel (64a, 64b) angeschlossene und mit dem mindestens einen elektrischen Verbraucher (14) gekoppelte Datensignalverarbeitungseinrichtung (68) vorgesehen ist, zur Übertragung der das bestimmte Datenformat aufweisenden Daten ein Datenbus an die erste Schnittstelleneinheit (32) angeschlossen ist und der gleiche Datenbus die zweite Schnittstelleneinheit (42) mit der Datensignalverarbeitungseinrichtung (68) verbindet.

11. Vorrichtung nach den Ansprüchen 4 und 10,
**dadurch gekennzeichnet, dass** die Datensignalverarbeitungseinrichtung (68) zumindest als Teil der Versorgungseinrichtung in der Moduleinheit (40) enthalten ist.

12. Vorrichtung nach mindestens einem der Ansprüche 8 bis 11,
**dadurch gekennzeichnet, dass**
die erste elektrische Versorgungsspannung eine Wechselspannung ist,
die erste Schnittstelleneinheit (32) einen Gleichrichter (52) aufweist, der die erste Versorgungsspannung in eine Gleichspannung umwandelt, die über die elektrische Leitung (34a) dem Primärteil (38a) der Drehübertragungseinheit (38) zugeführt wird,
in der ersten Schnittstelleneinheit (32) oder im Primärteil (38a) der Drehübertragungseinheit (38) Wechselrichtermittel (39) zur Umwandlung der umgewandelten Gleichspannung in eine für die Übertragung auf das Sekundärteil (38b) der Drehübertragungseinheit (38) geeignete erste Wechselspannung vorgesehen sind, und
die zweite Schnittstelleneinheit (42) Gleichrichtermittel (56) aufweist, die die erste Wechselspannung in eine erste Ausgangsgleichspannung zur Versorgung des mindestens einen elektrischen Verbrauchers (14) umwandelt.

13. Vorrichtung nach Anspruch 12,
**dadurch gekennzeichnet, dass** mindestens ein Leistungsstromrichter vorgesehen ist, der zwischen der zweiten Schnittstelleneinheit (42) und dem mindestens einen elektrischen Verbraucher (14) geschaltet ist und die erste Ausgangsgleichspannung in eine geeignete Spannung zur Versorgung des mindestens einen elektrischen Verbrauchers (14) umwandelt.

14. Vorrichtung nach den Ansprüchen 4 und 13,
**dadurch gekennzeichnet, dass** der mindestens eine Leistungsstromrichter zumindest als Teil der Versorgungseinrichtung in der Moduleinheit (40) enthalten ist.

15. Vorrichtung nach mindestens einem der Ansprüche 1 bis 13, bei welcher die in der Drehübertragungseinheit (38) enthaltene Energie- und/oder Datensignalübertragungsmittel erste Energieübertragungsmittel (54a, 54b) zur Energieversorgung des elektrischen Verbrauchers (14) und Datensignalübertragungsmittel (64a, 64b) zur Übertragung von Signalen zu oder von dem elektrischen Verbraucher (14) enthält,
**dadurch gekennzeichnet, dass** eine an die Datensignalübertragungsmittel (64a, 64b) angeschlossene und mit dem mindestens einen elektrischen Verbraucher (14) gekoppelte Datensignalverarbeitungseinrichtung (68) vorgesehen ist und die Drehübertragungseinheit (38) zweite Energieübertragungsmittel (74a, 74b) zur getrennten Energieversorgung der Datensignalverarbeitungseinrichtung (68) enthält, wobei insbesondere die Datensignalverarbeitungseinrichtung (68) zumindest als Teil der Versorgungseinrichtung in der Moduleinheit (40) enthalten ist.

16. Vorrichtung nach Anspruch 15 sowie nach mindestens einem der Ansprüche 8 bis 14,
**dadurch gekennzeichnet, dass** die erste Schnittstelleneinheit (32) zur zusätzlichen Einspeisung einer zweiten elektrischen Versorgungsspannung für die getrennte Energieversorgung der Datensignalverarbeitungseinrichtung (68) und die zweite Schnittstelleneinheit (42) zur Weiterleitung der über die zweiten Energieübertragungsmittel (74a, 74b) erhaltenen Energie an die Datensignalverarbeitungseinrichtung (68) ausgebildet ist, wobei insbesondere die zweite elektrische Versorgungsspannung eine Gleichspannung ist.

17. Vorrichtung nach mindestens einem der vorangegangenen Ansprüche,
**dadurch gekennzeichnet, dass** die Drehübertragungseinheit (38) als kontaktlose Drehübertragungseinheit (38) ausgebildet ist.

18. Vorrichtung nach Anspruch 8 oder 15 sowie Anspruch 17,
**dadurch gekennzeichnet, dass** die Energieübertragungsmittel (54a, 54b) induktiv arbeiten und /oder die Datensignalübertragungsmittel (64a, 64b) kapazitiv und/oder optisch arbeiten.

19. Vorrichtung nach Anspruch 15 sowie ggf. nach mindestens einem der Ansprüche 8 bis 14 und 16 bis 18,
mit einer Sicherheitseinrichtung, die in einem ersten Betriebszustand eine Berührung von kritischen und insbesondere gesundheitsgefährdenden Teilen der Vorrichtung während deren Betriebes verhindert und in einem zweiten Betriebszustand Zugriff auf diese Teile während des Stillstandes der Vorrichtung erlaubt,
**dadurch gekennzeichnet, dass** die Sicherheitseinrichtung so ausgebildet ist, dass sie in ihrem ersten Betriebszustand die Funktion der ersten und zweiten Energieübertragungsmittel (54a, 54b und 74a, 74b) und der Datensignalübertragungsmittel (64a, 64b) unbeeinflusst lässt und in ihrem zweiten Betriebszustand eine Deaktivierung oder Abschaltung der ersten Energieübertragungsmittel (54a, 54b) bewirkt, jedoch weiterhin die Funktion der zweiten Energieübertragungsmittel (74a, 74b) und der Datensignalübertragungsmittel (64a, 64b) unbeeinflusst lässt, wobei insbesondere die Sicherheitseinrichtung mindestens eine Abdeckung, die im ersten Betriebszustand geschlossen und im zweiten Betriebszustand geöffnet ist, und eine Überwachungseinheit aufweist, die bei Öffnen der Abdeckung die ersten Energieübertragungsmittel (54a, 54b) abschaltet oder zumindest deaktiviert und bevorzugt einen auf das Öffnen der Abdeckung ansprechenden Sensor und ein Sicherheitsrelais aufweist.

20. Vorrichtung nach mindestens einem der Ansprüche 8 bis 18 sowie nach Anspruch 19,
**dadurch gekennzeichnet, dass** die Sicherheitseinrichtung so ausgebildet ist, dass sie in ihrem zweiten Betriebszustand eine Abschaltung der ersten elektrischen Versorgungsspannung vor Einspeisung in die erste Schnittstelleneinheit (32) bewirkt.

## Claims

1. Apparatus for testing, processing and/or conveying articles of the tobacco-processing industry, comprising
at least one base body (6) which is mounted rotationally about a rotation axis and to or in which at least one electric consumer (14) is arranged,
a drive unit (10) which rotationally drives the base body (6) and comprises a first portion (10a), on which the base body (6) is coupled to the drive unit (10), and a second portion (10b) remote from the first portion (10a),
a transmission device (30) which is coupled to the electric consumer (14) and comprises a rotational transmission unit (38) comprising a stationary primary part (38a) and a secondary part (38b) mounted rotationally about a rotation axis, wherein the rotational transmission unit (38) contains power and/or data signal transmission means for supplying power to the electric consumer (14) and/or transmitting signals to or from the electric consumer (14), and wherein the rotational transmission unit (38) is arranged on or in the second portion (10b) of the drive unit (10) and its secondary part (38b) is coupled to and directly rotationally driven by the drive unit (10), and
a drive shaft (22) which rotates about a rotation axis, is driven by the drive unit (10) and comprises a first portion (22a), extending from the first portion (10a) of the drive unit (10), and a second portion (22b), located in the region of the second portion (10b) of the drive unit (10), wherein the secondary part (38b) of the rotational transmission unit (38) is non-rotationally coupled to the second portion (22b) of the drive shaft (22) so that the rotation axis of the secondary part (38b) of the rotational transmission unit (38) coincides with the rotation axis of the drive shaft (22).

2. Apparatus according to Claim 1, **characterized in that** the base body (6) is non-rotationally coupled to the first portion (22a) of the drive shaft (22) so that the rotation axis of the base body (6) coincides with the rotation axis of the drive shaft (22).

3. Apparatus according to Claim 1 or 2, **characterized in that** the drive shaft (22) is hollow and contains at least one electrical line (24) which is centrally axially laid, preferably in a twist-proof manner with respect to a rotation, and extends from the secondary part (38b) of the rotational transmission unit (38) to the base body (6) in order to supply the electric consumer (14).

4. Apparatus according to at least one of the preceding claims, **characterized in that** the base body (6) comprises a first portion (6a) and a second portion (6b), wherein the second portion (6b) of the base body (6) is located adjacently to the first portion (10a) of the drive unit (10) and the first portion (6a) of the base body (6) is remote from the second portion (6b) of the base body (6), and at least one module unit (40) comprising at least one supply device for supplying the electric consumer (14) is located adjacently to the first portion (6a) of the base body (6).

5. Apparatus according to Claims 3 and 4, **characterized in that** the base body (6) contains a cavity (23) which adjoins the cavity (23) of the drive shaft (22) or forms the cavity (23) of the first portion (22a), extending through the base body (6), of the drive shaft (22) and through which the electrical line (24) extends up to or into the module unit (40), wherein the module unit (40) in particular comprises a through-opening (47) which adjoins the cavity in the base body (6) and through which the electrical line (24) extends with its end (24a), wherein this end (24a) of the electrical line (24) comprises a connector (25) of a first type, and at least one connector (25) of a second type is connected to the supply device for supplying the electric consumer (14) and is provided for establishing an electrical connection to the at least one connector (44) of the first type, which is preferably arranged on the perimeter of the module unit (40).

6. Apparatus according to Claim 4 or 5, **characterized in that** the module unit (40) is substantially in the form of a disc and/or is designed as a lid, which is arranged on an end face delimiting the first portion (6a) of the base body (6).

7. Apparatus according to at least one of Claims 4 to 6, **characterized in that** a plurality of module units (40, 40a, 40b) are arranged one behind the other.

8. Apparatus according to at least one of the at least one of the preceding claims, in which the power and/or data signal transmission means contained in the rotational transmission unit (38) contains first power transmission means (54a, 54b) for supplying power to the electric consumer and data signal transmission means (64a, 64b) for transmitting signals to or from the electric consumer (14),
**characterized in that**
the transmission device (30) additionally comprises a stationary first interface unit (32) and a second interface unit (42) associated with the base body (6),
the first interface unit (32) is connected to the primary part (38a) of the rotational transmission unit (38) via an electrical line (34a) and is designed for feeding a first electrical supply voltage for supplying power to the electric consumer (14) into the first power transmission means (54a, 54b), and the second interface unit (42) is designed for conveying the power obtained from the first power transmission means (54a, 54b) to the at least one electric consumer (14), the first interface unit (32) comprises modulation means (62) which convert the data received from the first interface unit (32) and having a specific data format into proprietary signals suitable for transmission via the rotational transmission unit (38), and/or demodulation means which convert proprietary signals obtained from the rotational transmission unit (38) back into data having the specific data format, and
the second interface unit (42) comprises modulation means which convert the data signals received from the second interface unit (42) and having the specific data format into proprietary signals suitable for transmission via the rotational transmission unit (38), and/or demodulation means which convert proprietary signals obtained from the rotational transmission unit (38) back into data signals having the specific data format.

9. Apparatus according to Claims 4 and 8,
**characterized in that** the second interface unit (42) is contained in the module unit (40) at least as part of the supply device.

10. Apparatus according to Claim 8 or 9,
**characterized in that** a data signal processing device (68) which is connected to the data signal transmission means (64a, 64b) and coupled to the at least one electric consumer (14) is provided, and for transmission of the data having the specific data format, a data bus is connected to the first interface unit (32) and the same data bus connects the second interface unit (42) to the data signal processing device (68) .

11. Apparatus according to Claims 4 and 10,
**characterized in that** the data signal processing device (68) is contained in the module unit (40) at least as part of the supply device.

12. Apparatus according to at least one of Claims 8 to 11, **characterized in that**
the first electrical supply voltage is an alternating voltage, the first interface unit (32) comprises a rectifier (52) which converts the first supply voltage into a DC voltage that is fed to the primary part (38a) of the rotational transmission unit (38) via the electrical line (34a),
inverter means (39) for converting the converted DC voltage into a first AC voltage suitable for transmission to the secondary part (38b) of the rotational transmission unit (38) are provided in the first interface unit (32) or in the primary part (38a) of the rotational transmission unit (38), and
the second interface unit (42) comprises rectifier means (56) which convert the first AC voltage into a first DC output voltage for supplying the at least one electric consumer (14) .

13. Apparatus according to Claim 12,
**characterized in that** at least one power converter which is connected between the second interface unit (42) and the at least one electric consumer (14) and converts the first DC output voltage into a suitable voltage for supplying the at least one electric consumer (14) is provided.

14. Apparatus according to Claims 4 and 13,
**characterized in that** the at least one power converter is contained in the module unit (40) at least as part of the supply device.

15. Apparatus according to at least one of Claims 1 to 13, in which the power and/or data signal transmission means contained in the rotational transmission unit (38) contains first power transmission means (54a, 54b) for supplying power to the electric consumer (14) and data signal transmission means (64a, 64b) for transmitting signals to or from the electric consumer (14),
**characterized in that** a data signal processing device (68) connected to the data signal transmission means (64a, 64b) and coupled to the at least one electric consumer (14) is provided and the rotational transmission unit (38) comprises second power transmission means (74a, 74b) for separately supplying power to the data signal processing device (68), wherein the data signal processing device (68) is in particular contained in the module unit (40) at least as part of the supply device.

16. Apparatus according to Claim 15 and according to at least one of Claims 8 to 14,
**characterized in that** the first interface unit (32) is designed for additionally feeding a second electrical supply voltage for separately supplying power to the data signal processing device (68), and the second interface unit (42) is designed for conveying the power obtained via the second power transmission means (74a, 74b) to the data signal processing device (68), wherein the second electrical supply voltage is in particular a DC voltage.

17. Apparatus according to at least one of the preceding claims, **characterized in that** the rotational transmission unit (38) is designed as a contactless rotational transmission unit (38) .

18. Apparatus according to Claim 8 or 15 and Claim 17, **characterized in that** the power transmission means (54a, 54b) operate inductively and/or the data signal transmission means (64a, 64b) operate capacitively and/or optically.

19. Apparatus according to Claim 15 and, where applicable, according to at least one of Claims 8 to 14 and 16 to 18, comprising a safety device which, in a first operating state, prevents contact with critical and in particular harmful parts of the apparatus during the operation thereof and, in a second operating state, allows access to these parts during a standstill of the apparatus,
**characterized in that** that the safety device is designed such that, in its first operating state, it does not influence the function of the first and the second power transmission means (54a, 54b and 74a, 74b) and of the data signal transmission means (64a, 64b), and in its second operating state, brings about deactivation or switch-off of the first power transmission means (54a, 54b) but continues to not influence the function of the second power transmission means (74a, 74b) and of the data signal transmission means (64a, 64b), wherein the safety device in particular comprises at least one cover which is closed in the first operating state and open in the second operating state, and a monitoring unit which, upon opening of the cover, switches off or at least deactivates the first power transmission means (54a, 54b), and preferably comprises a sensor, responding to the opening of the cover, and a safety relay.

20. Apparatus according to at least one of Claims 8 to 18 and according to Claim 19,
**characterized in that** the safety device is designed such that, in its second operating state, it brings about a switch-off of the first electrical supply voltage prior to feeding into the first interface unit (32).

## Revendications

1. Dispositif de contrôle, de traitement et/ou de transport d'articles de l'industrie du tabac, comprenant
au moins un corps de base (6) monté rotatif autour d'un axe de rotation, sur lequel ou dans lequel corps est disposé au moins un consommateur électrique (14),
une unité d'entraînement (10) entraînant le corps de base (6) de façon rotative, qui comprend une première partie (10a) à laquelle le corps de base (6) est accouplé à l'unité d'entraînement (10), et une deuxième partie (10b) disposée éloignée de la première partie (10a),
un dispositif de transmission (30) couplé au consommateur électrique (14), qui comprend une unité de transmission de rotation (38) avec une partie primaire stationnaire (38a) et une partie secondaire (38b) montée rotative autour d'un axe de rotation, l'unité de transmission de rotation (38) comprenant des moyens de transmission d'énergie et/ou de signaux de données pour l'alimentation en énergie du consommateur électrique (14) et/ou pour la transmission de signaux vers le ou provenant du consommateur électrique (14) et l'unité de transmission de rotation (38) étant disposée sur ou dans la deuxième partie (10b) de l'unité d'entraînement (10) et sa partie secondaire (38b) étant couplée à l'unité d'entraînement (10) et étant entraînée directement en rotation par celle-ci, et
un arbre d'entraînement (22) rotatif autour d'un axe de rotation, entraîné par l'unité d'entraînement (10) et ayant une première partie (22a) qui s'étend à partie de la première partie (10a) de l'unité d'entraînement (10), et ayant une deuxième partie (22b) qui est située dans la zone de la deuxième partie (10b) de l'unité d'entraînement (10), la partie secondaire (38b) de l'unité de transmission de rotation (38) étant solidaire en rotation avec la deuxième partie (22b) de l'arbre d'entraînement (22) si bien que l'axe de rotation de la partie secondaire (38b) de l'unité de transmission de rotation (38) coïncide avec l'axe de rotation de l'arbre d'entraînement (22).

2. Dispositif selon la revendication 1, **caractérisé en ce que** le corps de base (6) est solidaire en rotation avec la première partie (22a) de l'arbre d'entraînement (22), si bien que l'axe de rotation du corps de base (6) coïncide avec l'axe de rotation de l'axe d'entraînement (22).

3. Dispositif selon la revendication 1 ou 2, **caractérisé en ce que** l'arbre d'entraînement (22) est creux et contient au moins un conduit électrique (24) posé de préférence de manière axiale centrale et protégé contre le vrillage, qui s'étend, pour l'alimentation du consommateur électrique (14), de la partie secondaire (38b) de l'unité de transmission de rotation (38) au corps de base (6).

4. Dispositif selon au moins une des revendications précédentes, **caractérisé en ce que** le corps de base (6) comprend une première partie (6a) et une deuxième partie (6b), la deuxième partie (6b) du corps de base (6) étant située voisine de la première partie (10a) de l'unité d'entraînement (10) et la première partie (6a) du corps de base (6) étant situé éloignée de la deuxième partie (6b) du corps de base (6), et au moins une unité de module (40) étant montée voisine de la première partie (6a) du corps de base (6), qui comprend au moins un dispositif d'alimentation pour l'alimentation du consommateur électrique (14).

5. Dispositif selon les revendications 3 et 4, **caractérisé en ce que** le corps de base (6) contient une cavité (23) qui est adjacente à la cavité (23) de l'arbre d'entraînement (22) ou constitue la cavité (23) de la première partie (22a) de l'arbre d'entraînement (22) s'étendant à travers le corps de base (6) et à travers laquelle le conduit électrique (24) est tiré jusqu'à ou dans l'unité de module (40), notamment l'unité de module (40) comprenant une ouverture de passage (47) qui est disposée adjacente à la cavité dans le corps de base (6) et à travers laquelle le conduit électrique (24) est tiré avec son extrémité (24a), cette extrémité (24a) du conduit électrique (24) comprenant un connecteur enfichable (25) d'un premier type, et au moins un connecteur (25) d'un deuxième type étant connecté au dispositif d'alimentation pour l'alimentation du consommateur électrique (14) et étant prévu pour établir une liaison électrique avec ledit au moins un connecteur enfichable (25) du premier type qui est disposé de préférence à la périphérie de l'unité de module (40).

6. Dispositif selon la revendication 4 ou 5, **caractérisé en ce que** l'unité de module (40) a essentiellement la forme d'un disque et/ou est formée comme un couvercle qui est disposé sur une partie frontale limitant la première partie (6a) du corps de base (6).

7. Dispositif selon au moins l'une des revendications 4 à 6, **caractérisé en ce que** plusieurs unités de module (40, 40a, 40b) sont disposées les unes derrière les autres.

8. Dispositif selon au moins l'une des revendications précédentes, dans lequel les moyens de transmission d'énergie et/ou de signaux de données contenus dans l'unité de transmission de rotation (38) comprennent des premiers moyens de transmission d'énergie (54a, 54b) pour l'alimentation en énergie du consommateur électrique et des moyens de transmission de signaux de données (64a, 64b) pour la transmission de signaux vers le consommateur électrique (14) ou en provenance de ce dernier, **caractérisé en ce que**
le dispositif de transmission (30) comprend en plus une première unité d'interface (32) disposée en position fixe et une deuxième unité d'interface (42) associée au corps de base (6),
la première unité d'interface (32) est connectée à la partie primaire (38a) de l'unité de transmission de rotation (38) par une ligne électrique (34a) et est configurée pour l'injection d'une première tension électrique d'alimentation, pour l'alimentation en énergie du consommateur électrique (14), dans les premiers moyens de transmission d'énergie (54a, 54b), et la deuxième unité d'interface (42) est configurée pour transmettre l'énergie reçue des premiers moyens de transmission d'énergie (54a, 54b) audit au moins un consommateur électrique (14),
la première unité d'interface (32) comprend des moyens de modulation (62) qui convertissent les données reçues par la première unité d'interface (32) et ayant un format de données déterminé, en des signaux propriétaires propres à la transmission par l'unité de transmission de rotation (38), et/ou des moyens de démodulation qui retransforment les signaux propriétaires reçus de l'unité de transmission de rotation (38) en des données ayant le format de données déterminé, et
la deuxième unité d'interface (42) comprend des moyens de modulation qui convertissent les signaux de données reçus par la deuxième unité d'interface (42), ayant le format de données déterminé, en des signaux propriétaires propres à la transmission par l'unité de transmission de rotation (38), et/ou des moyens de démodulation qui retransforment les signaux propriétaires reçus de l'unité de transformation de rotation (38) en des signaux de données ayant le format de données déterminé,

9. Dispositif selon les revendications 4 et 8, **caractérisé en ce que** la deuxième unité d'interface (42) est contenue dans l'unité de module (40) au moins en tant que partie du dispositif d'alimentation.

10. Dispositif selon la revendication 8 ou 9, **caractérisé en ce qu'**un dispositif de traitement de signaux des données (68) raccordé aux moyens de transmission de signaux de données (64a, 64b) et connecté audit au moins un consommateur électrique (14) est prévu, un bus de données est raccordé à la première unité d'interface (32) pour la transmission des données ayant le format de données déterminé et le même bus de données relie la deuxième unité d'interface (42) au dispositif de traitement de signaux des données (68).

11. Dispositif selon les revendications 4 et 10, **caractérisé en ce que** le dispositif de traitement de signaux des données (68) est contenu dans l'unité de module (40) au moins en tant que partie du dispositif d'alimentation.

12. Dispositif selon au moins l'une des revendications 8 à 11, **caractérisé en ce que**
la première tension d'alimentation électrique est une tension alternative,
la première unité d'interface (32) comprend un redresseur (52) qui transforme la première tension d'alimentation en une tension continue qui est transmise à la partie primaire (38a) de l'unité de transmission de rotation (38) par la ligne électrique (34a),
dans la première unité d'interface (32) ou dans la partie primaire (38a) de l'unité de transmission de rotation (38), des moyens onduleurs (39) sont prévus pour la transformation de la tension continue transformée en une première tension alternative appropriée pour la transmission vers la partie secondaire (38b) de l'unité de transmission de rotation (38), et
la deuxième unité d'interface (42) comprend des moyens redresseurs (56) qui transforment la première tension alternative en une première tension continue de sortie pour l'alimentation dudit au moins un consommateur électrique (14).

13. Dispositif selon la revendication 12, **caractérisé en ce qu'**est prévu au moins un convertisseur de courant de puissance qui est branché entre la deuxième unité d'interface (42) et ledit au moins un consommateur électrique (14) et transforme la première tension continue de sortie en une tension adéquate pour l'alimentation dudit au moins un consommateur électrique (14).

14. Dispositif selon les revendications 4 et 13, **caractérisé en ce que** ledit au moins un convertisseur de courant de puissance est contenu dans l'unité de module (40) au moins en tant que partie du dispositif d'alimentation.

15. Dispositif selon au moins l'une des revendications 1 à 13, dans lequel les moyens de transmission d'énergie et/ou de signaux de données contenus dans l'unité de transmission de rotation (38) comprennent des premiers moyens de transmission d'énergie (54a, 54b) pour l'alimentation en énergie du consommateur électrique (14) et des moyens de transmission de signaux de données (64a, 64b) pour la transmission de signaux vers le consommateur d'électrique (14) ou provenant de celui-ci,
**caractérisé en ce qu'**un dispositif de traitement de signaux de données (68), relié aux moyens de transmission de signaux des données (64a, 64b) et accouplé audit au moins un consommateur électrique (14), est prévu, et que l'unité de transmission de rotation (38) contient des deuxièmes moyens de transmission d'énergie (74a, 74b) pour une alimentation séparée en énergie du dispositif de traitement de signaux de données (68), notamment, le dispositif de traitement de signaux de données (68) étant contenu dans l'unité de module au moins en tant que partie du dispositif d'alimentation.

16. Dispositif selon la revendication 15 ainsi que selon au moins l'une des revendications 8 à 14, **caractérisé en ce que** la première unité d'interface (32) est configurée pour une injection supplémentaire d'une deuxième tension d'alimentation électrique pour une alimentation en énergie séparée du dispositif de traitement de signaux de données (68), et la deuxième unité d'interface (42) est configurée pour la transmission d'énergie reçue par les deuxièmes moyens de transmission d'énergie (74a, 74b), au dispositif de traitement de signaux de données (68), notamment, la deuxième tension d'alimentation électrique étant une tension continue.

17. Dispositif selon au moins l'une des revendications précédentes, **caractérisé en ce que** l'unité de transmission de rotation (38) est configurée comme une unité de transmission de rotation (38) sans contact.

18. Dispositif selon la revendication 8 ou 15 ainsi que la revendication 17, **caractérisé en ce que** les moyens de transmission d'énergie (54a, 54b) travaillent de manière inductive et/ou les moyens de transmission de signaux de données (64a, 64b) travaillent de manière capacitive et/ou optique.

19. Dispositif selon la revendication 15 ainsi que, le cas échéant, selon au moins l'une des revendications 8 à 14 et 16 à 18,
avec un dispositif de sécurité qui empêche, dans un premier état de marche, un contact des parties critiques et particulièrement nocives pour la santé du dispositif pendant sa marche et permet, dans un deuxième état de marche, une intervention sur ces parties pendant l'état de repos du dispositif,
**caractérisé en ce que** le dispositif de sécurité est configuré de façon telle que, dans son premier état de marche, il n'exerce pas d'influence sur la fonction des premiers et deuxièmes moyens de transmission d'énergie (54a, 54b et 74a, 74b) ni des moyens de transmission de signaux de données (64a, 64b), et que, dans son deuxième état de marche, il provoque une désactivation ou un arrêt des premiers moyens de transmission d'énergie (54a, 54b), continuant cependant à ne pas exercer d'influence sur les deuxièmes moyens de transmission d'énergie (74a, 4b) et les moyens de transmission de signaux de données (64a, 64b), notamment, le dispositif de sécurité comprenant au moins un cache qui est fermé dans le premier état de marche et ouvert dans le deuxième état de marche, et un dispositif de surveillance qui arrête, ou du moins désactive, les premiers moyens de transmission d'énergie à l'ouverture du cache, et comprend de préférence un détecteur réagissant à l'ouverture du cache et un relais de sécurité.

20. Dispositif selon l'une au moins des revendications 8 à 18 ainsi que la revendication 19, **caractérisé en ce que** le dispositif de sécurité est configuré de manière telle que, dans son deuxième état de marche, il provoque un arrêt de la première tension d'alimentation électrique avant l'injection dans la première unité d'interface (32).
